# EUROPÄISCHE PATENTSCHRIFT

(11) **EP 0 935 763 B1**
(45) Veröffentlichungstag und Bekanntmachung des Hinweises auf die Patenterteilung: **19.02.2003**
(21) Anmeldenummer: 97949885.4
(22) Anmeldetag: 03.11.1997
(51) Int. Cl.: G01S 13/28, G01S 13/76, G08B 13/14

(54) **SICHERUNGSSYSTEM**
SECURITY SYSTEM
SYSTEME DE SECURITE

(30) Priorität: 01.11.1996 DE 19646748
(43) Veröffentlichungstag der Anmeldung: 18.08.1999
(73) Patentinhaber: Nanotron Technologies GmbH, 10555 Berlin (DE)
(72) Erfinder: KOSLAR, Manfred, D-10629 Berlin (DE)
(74) Vertreter: Eisenführ, Speiser & Partner
(86) Internationale Anmeldenummer: DE9702605
(87) Internationale Veröffentlichungsnummer: WO98020362

(56) Entgegenhaltungen:
- WO-A-96/18913
- US-A- 3 969 725

## Beschreibung

Die Erfindung betrifft ein Sicherungssystem der im Oberbegriff des Anspruchs 1 angegebenen Art. WO 96/18913 offenbart bereits ein Distanzermittlungs- und Alarmsystem, aus der ein Sicherungssystem gemäß Oberbegriff von Anspruch 1 bekannt ist.

US 3 969 725 A offenbart eine Entfernungsmeßanordnung zur Bestimmung des Abstandes zwischen einem Flugzeug und einer Bodenstelle unter Verwendung eines Abfragegeräts und eines Transponders , die aus einem mit frequenzmodulierten Impulsen arbeitenden Chirp-Abfragesender und einem mit einem bewerteten angepaßten Filter ausgestatteten Impulskompressions-Transponderempfänger besteht. Der Abfragesender erzeugt einen eine Frequenzmodulation aufweisenden Impuls (Chirp-Impuls), der eine niedrige Spitzenleistung und eine große Impulsdauer aufweist. Das Impulskompressionsfilter des Transponderempfängers setzt den empfangenen Chirp-Impuls in einen kurzen Impuls mit erhöhtem Geräuschabstand um.

Sicherungssysteme werden heute in vielfältiger Artfür unterschiedliche Anwendungen benötigt. Eine davon ist die Sicherung von Gegenständen gegen Diebstahl.

Ein derartiges System ist beispielsweise aus der deutschen Offenlegungsschrift DE 36 18 416 A1 bekannt und besteht im wesentlichen aus zwei Sende-/Empfangseinrichtungen, von denen eine an dem zu sichernden Gegenstand angebracht ist, während die andere stationär in einer Überwachungseinheit angeordnet ist. Während des Betriebs kommunizieren die beiden Sende-/Empfangseinrichtungen miteinander, wobei die eine Sende-/Empfangseinrichtung ein Kontrollsignal erzeugt, auf das die andere Sende-/Empfangseinrichtung mit einem Quittungssignal antwortet.

Die Sende-/Empfangseinrichtung, die das Kontrollsignal abstrahlt, misst nach dem Empfang des Quittungssignals die Zeitdifferentz zwischen dem Aussenden des Kontrollsignals und dem Empfang des Quittungssignals und löst beim Überschreiten einer vorgegebenen Signallaufzeit Alarm aus.

Nachteilig bei dem vorbekannten Sicherungssystem ist jedoch, dass die für eine sichere Datenübertragung zwischen den beiden Sende-/Empfangseinrichtungen erforderliche Sendeleistung relativ groß ist.

Der Erfindung liegt deshalb die Aufgabe zugrunde, ein Sicherungssystem der eingangs genannten Art mit einer verringerten Sendeleistung zu schaffen.

Diese Aufgabe wird mit einem Sicherungssystem mit den Merkmalen nach Anspruch 1 gelöst. Vorteilhafte Weiterbildungen sind in den Unteransprüchen beschrieben.

Die Erfindung schließt die technische Lehre ein, als Kontroll- bzw. Quittungssignal senderseitig Impulse sich während der Impulsdauer ändernder Frequenz zu erzeugen und diese Impulse empfängerseitig durch Dispersionsfilter zeitlich zu komprimieren.

Ein derartiges Dispersionsfilter ist zwar prinzipiell aus der europäischen Patentanmeldung EP 0 223 554 A2 bekannt, ohne daß nähere Anwendungshinweise gegeben worden wären.

Die Erfindung geht von der Erkenntnis aus, daß die als Kontroll- bzw. Quittungssignal übertragenen Impulse zur Erreichung einer hohen Genauigkeit bei der Entfernungsmessung nur eine geringe zeitliche Unschärfe aufweisen dürfen. Um derartig kurze Impulse übertragen zu können ist dagegen eine relativ große Bandbreite erforderlich.

Mit der Erfindung wird ein Sicherungssystem zur Entfernungsmessung geschaffen, das auf einer Messung der Signallaufzeit beruht und auch bei signalmäßig gestörten Umgebungen mit einer geringen Sendeleistung bei trotzdem geringer zeitlicher Unschärfe des emittierten Signals auskommt.

Bei dem erfindungsgemäßen Sicherungssystem werden zur Laufzeitbestimmung Chirpsignale abgestrahlt, die im Empfänger durch ein angepaßtes Dispersionsfilter zeitlich komprimiert werden, um eine geringe zeitliche Unschärfe als Voraussetzung für eine exakte Entfernungsmessung zu erreichen und darüberhinaus empfängerseitig die Amplitude zu erhöhen.

Mindestens eine der Übertragungseinrichtungen weist hierzu sendeseitig eine Signalquelle auf, die als Meßsignal Impulse - auch als Chirpsignale bezeichnet - mit einer während der Impulsdauer entsprechend einer vorgegebenen, vorzugsweise linearen, Modulationskennlinie monoton fallenden oder steigenden Frequenz erzeugt. Es ist jedoch nicht erforderlich, daß die Modulationskennlinie linear ist. Maßgebend ist lediglich, daß die Frequenz jeweils während der Dauer eines Impulses im mathematischen Sinn monoton steigend oder fallend ist.

Die empfangende Übertragungseinrichtung weist dagegen zur Impulskompression ein Dispersionsfilter mit einer entsprechend einer vorgegebenen Filterkennlinie frequenzabhängigen Signallaufzeit auf. Wichtig ist hierbei, daß die Filterkennlinie derart an die sendeseitig vorgenommeine Modulation angepaßt ist, daß die Signalanteile der entsprechend dieser Modulationskennlinie modulierten Impulse aufgrund der frequenzabhängig unterschiedlichen Signallaufzeit durch das Dispersionsfilter an dessen Ausgang im wesentlichen koinzident und folglich mit geringer zeitlicher Unschärfe erscheinen.

Die sendeseitige Erzeugung der frequenzmodulierten Impulse kann auf verschiedene Arten erfolgen, von denen beispielhaft einige im folgenden kurz beschrieben werden.

In einer Variante der Erfindung wird zunächst näherungsweise ein Dirac-Impuls erzeugt und einem Tiefpaßfilter zugeführt, dessen Filterkennlinie kurz vor Erreichen der Grenzfrequenz eine Überhöhung aufweist und den Dirac-Impuls somit in einen si-Impuls transformiert, dessen Form durch die bekannte si-Funktion si(x) = ^{sinx}/ₓ beschrieben wird. Das si-förmige Ausgangssignal des Tiefpaßfilters wird anschließend auf einen Amplitudenmodulator gegeben, der der Trägerschwingung eine si-förmige Hüllkurve aufprägt. Wird das auf diese Weise erzeugte Signal einem dispersiven Filter zugeführt, so erscheint am Ausgang ein frequenzmodulierter Impuls. In dieser Variante der Erfindung erfolgt also senderseitig zunächst eines Expansion des relativ scharfen si-Impulses durch das Dispersionsfilter in einen frequenzmodulierten Impuls, der gegenüber dem si-Impuls verlängert ist und eine entsprechend geringere Amplitude aufweist.

Gemäß einer anderen Variante der Erfindung erfolgt die Erzeugung des frequenzmodulierten Impulses dagegen mittels einer PLL-Schleife (PLL: Phase Locked Loop) und einem spannungsgesteuerten Oszillator (VCO: Voltage Controlled Oscillator). Hierzu wird ein Rechteckimpuls zunächst in einem Integrator in einen sägezahnförmigen Impuls umgewandelt. Das auf diese Weise erzeugte Signal wird dann zur Ansteuerung des VCO's verwendet, so daß die Frequenz eines Ausgangsimpulses während der Impulsdauer linear zunimmt oder fällt.

In einer anderen Variante der Erfindung erfolgt die Erzeugung des frequenzmodulierten Impulses im Sender durch eine digitale Signalverarbeitungseinheit, was vorteilhaft die Realisierung beliebiger Modulationskennlinien ermöglicht.

Die vorstehend erwähnten Dispersionsfilter werden vorzugsweise als Oberflächenwellenfilter (SAW-Filter : Surface Accoustic Waves) realisiert, da sich derartige Filter mit hoher Genauigkeit und Stabilität herstellen lassen. Darüber hinaus bieten derartige Oberflächenwellenfilter den Vorteil, daß sich Amplitudengang und Phasengang unabhängig voneinander dimensionieren lassen, was die Möglichkeit eröffnet, das in jedem Empfänger erforderliche schmalbandige Bandpaßfilter und das Dispersionsfilter in einem Bauteil zu verwirklichen.

Gemäß der Erfindung erfolgt die Entfernungsmessung zwischen zwei der vorstehend beschriebenen Übertragungseinrichtungen, wobei die eine Übertragungseinrichtung vorzugweise an oder in dem Meßobjekt angebracht ist, wohingegen die andere Übertragungseinrichtung vorzugsweise stationär angeordnet ist.

Zur Entfernungsmessung erzeugt die erste Übertragungseinrichtung mit einem Sender ein Meßsignal, das an die zweite Übertragungseinrichtung abgestrahlt und dort von einem Empfänger aufgenommen wird. Die Messung der Signallaufzeit erfolgt durch ein Zeitmeßgerät, das eingangsseitig mit dem Empfänger der zweiten Übertragungseinrichtung verbunden ist.

Die Abstandsbestimmung erfolgt durch die Bestimmung der Zeitdauer des Hin- und Rücklaufs der Signale zwischen zwei Sender- und Empfängerpaaren. Die Entfernungsmessung wird hierbei eingeleitet, indem der Sender der zweiten Übertragungseinrichtung ein Meßsignal - im folgenden auch als Kontrollsignal bezeichnet - an den Empfänger der ersten Übertragungseinrichtung abgibt. Beim Empfang dieses Meßsignals triggert der Empfänger dieser Übertragungseinrichtung den Sender derselben Übertragungseinrichtung an, der daraufhin ein Meßsignal als Quittungssignal abgibt und an den Empfänger der zweiten Übertragungseinrichtung überträgt. Das Zeitmeßgerät mißt hierbei die Zeitdifferenz zwischen der Abgabe des Meßsignals durch die zweite Übertragungseinrichtung und dem Empfang des Quittungssignals von der ersten Übertragungseinrichtung. Die gemessene Signallaufzeit entspricht hierbei also der doppelten Entfernung zwischen den beiden Übertragungseinrichtungen.

In der vorstehend beschriebenen Variante der Erfindung erfolgt die Entfernungsmessung zwischen den beiden kommunizierenden Übertragungseinrichtungen durch Messung der Signallaufzeit zwischen der Abgabe des Kontrollsignals durch die eine Übertragungseinrichtung und dem anschließenden Empfang des von der anderen Übertragungseinrichtung ausgehenden Quittungssignals. In einer vorteilhaften Variante der Erfindung ist zur Erhöhung der Meßgenauigkeit vorgesehen, die internen Signallaufzeiten zu ermitteln und bei der Berechnung der Entfernung zwischen den kommunizierenden Übertragungseinrichtungen zu berücksichtigen.

Das sendeseitig erzeugte Kontrollsignal wird hierzu ohne den Umweg über die jeweils andere Übertragungseinrichtung direkt auf den Empfänger derselben Übertragungseinrichtung gegeben. Hierzu ist es beispielsweise möglich, zur Abgabe des Kontrollsignals und zum Empfang des Quittungssignals dieselbe Antenne zu verwenden, so daß das sendeseitig abgegebene Kontrollsignal zwangsläufig auch die Empfängerseite derselben Übertragungseinrichtung erreicht. Stattdessen ist es jedoch auch möglich, Sender und Empfänger der einzelnen Übertragungseinrichtungen im Normalbetrieb zu trennen und nur zeitlich begrenzt während eines Kalibrierungsvorgangs zusammenzuschalten. Da das Kontrollsignal bei einer direkten Ansteuerung des Empfängers wesentlich stärker ist als das Quittungssignal, ist es in dieser Variante der Erfindung vorteilhaft, die Empfindlichkeit des Empfängers unmittelbar nach der Abgabe eines Kontrollsignals vorübergehend herunterzuregeln, damit das Kontrollsignal den Empfänger nicht übersteuert. Nach der empfängerseitigen Detektion des von derselben Übertragungseinrichtung abgegebenen Kontrollsignals ermittelt das Zeitmeßgerät die interne Signallaufzeit zwischen der Abgabe des Kontrollsignals und der Detektion desselben Kontrollsignals, die dann in einem Speicherelement zwischengespeichert wird. Die Berücksichtigung der internen Signallaufzeit erfolgt dann durch eine Recheneinheit, die aus der zwischengespeicherten internen Signallaufzeit und der von dem Zeitmeßgerät beim Eintreffen des Quittungssignals ermittelten Gesamtlaufzeit die Entfernung zwischen den beiden kommunizierenden Übertragungseinrichtungen berechnet. Da auf die vorstehend beschriebene Weise jeweils nur die interne Signallaufzeit in einer Übertragungseinrichtung ermittelt wird, während die Entfernungsmessung auch durch die interne Signallaufzeit in der anderen Übertragungseinrichtung verfälscht wird, subtrahiert die Recheneinheit von der gemessenen Gesamtlaufzeit vorzugsweise den doppelten Wert der für eine Übertragungseinrichtung ermittelten internen Signallaufzeit. Es ist jedoch auch möglich, die interne Signallaufzeit in beiden Übertragungseinrichtungen zu ermitteln und an die jeweils andere Übertragungseinrichtung - beispielsweise zusammen mit dem Kontroll- bzw. Quittungssignal - zu übertragen. In diesem Fall subtrahiert die Recheneinheit von der gemessenen Gesamtlaufzeit die für beide Übertragungseinrichtungen ermittelten internen Signallaufzeiten, was bei unterschiedlich aufgebauten Übertragungseinrichtungen und demzufolge auch unterschiedlichen internen Signallaufzeiten eine Verbesserung der Meßgenauigkeit bewirkt.

Wenn zwischen den beiden Übertragungseinrichtungen neben dem Kontroll- bzw. Quittungssignal auch weitere informationstragende Signale übertragen werden - wie beispielsweise in der vorstehend beschriebenen Variante der Erfindung die Übertragung der internen Signallaufzeit -, so erfolgt diese Übertragung vorzugsweise mit einem Fehlerkorrekturkode, der die Erkennung eines Übertragungsfehlers ermöglicht. Das Kontroll- und Quittungssignal ermöglicht durch die Aufnahme entsprechender Kennungen einen Mechanismus, welcher dafür sorgt, daß lediglich die Signale einander zugeordneter Sender-/Empfänger-Systeme einen Meßvorgang auslösen. Durch die Verwendung der erfindungsgemäßen Chirp-Signale ist es damit möglich, daß mehrere gleichartige Systeme in übereinstimmenden Frequenzbändern nebeneinander arbeiten, ohne sich zu stören.

In einer anderen vorteilhaften Variante der Erfindung dient das Sicherungssystem zur Detektion der Entfernung eines Gegenstands aus einem vorgegebenen Bereich oder zur Detektion des Eindringens des Gegenstandes in den Bereich, insbesondere zur Diebstahlsicherung in einem Kaufhaus. Hierzu ist eine Übertragungseinrichtung in der Regel an einem beweglichen Gegenstand angebracht, der vor einer unerlaubten Entfernung zu sichern ist, wobei die Energieversorgung dieser Übertragungseinrichtung in der Regel durch eine eingebaute Batterie erfolgt, so daß die maximale Betriebsdauer des Sicherungssystems durch die Batterielebensdauer beschränkt ist.

In einer weiterbildenden Variante der Erfindung ist deshalb vorgesehen, den Energieverbrauch zu verringern, um die Batterielebensdauer anzuheben. Hierzu wird die Sendeleistung oder die Eingangsverstärkung an die am Einsatzort vorliegenden Übertragungsverhältnisse angepaßt. So ist bei geringen Störsignalen auch nur eine geringe Sendeleistung bzw. eine geringe Eingangsverstärkung erforderlich, wohingegen in stark gestörten Umgebungen eine entsprechend größere Sendeleistung bzw. Eingangsverstärkung nötig ist. Die Übertragungseinrichtung weist deshalb in dieser Variante der Erfindung empfängerseitig ein Feldstärkemeßgerät auf, das zum einen die Feldstärke der von dem anderen Sende/Empfangsgerät übermittelten Signale und zum anderen die Feldstärke des Rauschens mißt, um daraus mittels einer Recheneinheit den Störabstand bzw. das Signal/Rauschverhältnis zu ermitteln. Der auf diese Weise ermittelte Wert dient dann zur Ansteuerung eines Reglers, der ausgangsseitig zur Regelung der Eingangsverstärkung mit einem empfängerseitig angeordneten Eingangsverstärker oder zur Regelung der Sendeleistung mit dem jeweiligen Sender verbunden ist, welche das Kontrollsignal erzeugt. Die Regelung der Eingangsverstärkung bzw. der Sendeleistung erfolgt hierbei derart, daß der Störabstand einerseits einen Minimalwert nicht unterschreitet, der zur ordnungsgemäßen Kommunikation zwischen den Übertragungseinrichtungen erforderlich ist, andererseits aber möglichst gering gehalten wird, um nicht unnötig Energie zu verbrauchen.

Nach einer vorteilhaften Weiterbildung der Erfindung weisen die miteinander kommunizierenden Übertragungseinrichtungen des Sicherungssystems elektronische Steuerungsmittel auf, um die Kommunikation der Übertragungseinrichtungen des Sicherungssystems bei intermittierender Betriebsführung durchzuführen. Diese Maßnahme ermöglicht eine weitere Verringerung des Energieverbrauchs und damit eine Verlängerung der Batterielebensdauer.

Bei einem intermittierenden Betrieb des Sicherungssystems arbeiten Sender und Empfänger der kommunizierenden Übertragungseinrichtungen beispielsweise jeweils nur 500µs bei einer Zykluszeit von ein bis zwei Sekunden in der vorstehend beschriebenen Art und Weise zusammen.

Das bedeutet, daß sie in einer (elektronisch) sehr langen Zeit von etwa einer halben Sekunde nicht arbeiten und dabei für die die Versorgungsspannung liefernde Batterie ein für eine Energieeinsparung günstiges Ein/Aus-Tastverhältnis von etwa 1 zu 1000 oder mehr realisierbar ist.

Die Erfindung schließt weiterhin die technische Lehre ein, das Kontrollsignal und/oder das Quittungssignal zu kodieren, um eine Vortäuschung des Quittungssignals zu Fälschungszwecken beispielsweise durch einen Dieb zu verhindern.

Hierbei ist es besonders günstig, den Aufwand nicht auf die Erhöhung der Komplexität des Kodes zu konzentrieren, sondern in vorteilhafter Weise Mittel vorzusehen, durch welche ein verwendeter und durchaus nur mit entsprechend hohem Aufwand zu entschlüsselnder Kode in vorgegebener Weise wechselbar ist.

Entsprechend einer bevorzugten Ausführungsform der Erfindung weist das Sicherungssystem zwei drahtlos, wechselseitig miteinander kommunizierende Übertragungseinrichtungen auf, in denen jeweils ein Sender und ein Empfänger vorgesehen ist. Die Informationsübertragung erfolgt vorzugsweise durch Hochfrequenz-, Licht- oder Schallenergie. Die miteinander kommunizierenden Übertragungseinrichtungen sind im wesentlichen gleichartig aufgebaut und weisen jeweils erste elektronische Steuerungsmittel derart auf, daß die Sendeanordnung der ersten Übertragungseinrichtung ein kodiertes Kontrollsignal abgeben kann, welches nach Empfang durch die zweite Übertragungseinrichtung diese zur Abgabe eines kodierten, zum Empfang durch die erste Übertragungseinrichtung bestimmten Quittungssignals stimuliert. Dabei unterscheidet sich die Kodierung des Quittungssignals von der des Kontrollsignals. Nach Empfang des Quittungssignals in der ersten Übertragungseinrichtung wird von dieser erneut ein Kontrollsignal abgegeben, welches einen sich von dem Kode des letzten Signals unterscheidenden Kode aufweist. In dieser Form erfolgt eine ständige wechselseitige Verbindung zwischen den beiden kommunizierenden Übertragungseinrichtungen des erfindungsgemäßen Sicherungssystems. Der Kode wird auf nicht vorhersehbare Weise gewechselt, wobei die Geschwindigkeit der wechselseitigen Übertragung so groß ist, daß auch mit Rechnern höchster Rechenkapazität in der zur Verfügung stehenden Zeit keine Entschlüsselung erfolgen könnte. Ist dann die Enischlüsselung erfolgt, hat der Kode schon mehrfach gewechselt.

Zur Erhöhung der Alarmsicherheit und zur Verhinderung von Störbeeinträchtigungen durch andere in der Nähe befindliche gleichartige Geräte sind die ersten elektronischen Steuerungsmittel in den miteinander kommunizierenden Übertragungseinrichtungen derart ausgebildet, daß die Kodierung von Kontrollsignal und Quittungssignal nach jedem Sende- und Empfangszyklus verändert wird.

Die ersten elektronischen Steuerungsmittel weisen einen mit einem Zufallsgenerator und einer Speichereinheit kombinierten Kode-Manager auf, welcher die erfindungsgemäß zyklisch vorgenommene Änderung der Kodierung der ausgesendeten Signale nach einem bestimmten Prinzip steuert. Das von der jeweiligen Sendeanordnung zu emittierende Signal wird zunächst durch den Zufallsgenerator erzeugt und danach kodiert. Der Kode Kₙ₋₁ wird aus einem bereits gesendeten Signal gebildet, um auf diese Weise einen zwar statistisch schwankenden, aber von der jeweils vorherigen Betriebsführung der beiden kommunizierenden Übertragungseinrichtungen abhängigen Kode als Schlüssel zu erhalten. Dieser Kode wird in der Speichereinheit abrufbar eingespeichert. Das zu sendende Signal wird nach dem vorangegangenen Kode Kₙ₋₁ verschlüsselt und gesendet. Gleichzeitig bildet der Sender der einen Übertragungseinrichtung aus der aktuellen Zufallszahl und dem Kode Kₙ₋₁ einen neuen Kode Kₙ und speichert diesen in dem Speicher ab.

Das von dem Sender stammende Signal wird von der anderen Übertragungseinrichtung über den geltenden Schlüssel Kₙ₋₁, welcher aus der vorherigen Kommunikation bekannt ist, entschlüsselt und auf Vereinbarkeit geprüft. Das Ergebnis wird in dieser Übertragungseinrichtung anerkannt, abgespeichert und zur Bildung eines neuen Kodes Kₙ herangezogen, welchen der Sender der anderen Übertragungseinrichtung bereits vor der Signalabgabe gebildet hat. Der Sender der Übertragungseinrichtung generiert über den entsprechenden Zufallsgenerator ein neues Sendesignal, kodiert es nach Kₙ und sendet dieses zu dem Empfänger der ersten Übertragungseinrichtung. Gleichzeitig wird dabei der Kode Kₙ₊₁ gebildet und abgespeichert. Der Empfänger der nun empfangenden Übertragungseinrichtung kann das von der anderen Übertragungseinrichtung gesendete Signal dekodieren, da sie selbst den Kode Kₙ gebildet hat.

Da die Sender und Empfänger der beiden miteinander kommunizierenden Übertragungseinrichtungen seit der ersten Initialisierung stets von der gleichen Signalbasis ausgegangen sind und ihnen durch den vorangegangenen Signaldialog die statistisch erzeugten Signale bekannt sind, ist in dem Sicherungssystem in vorteilhafter Weise ein in einem wählbaren einstellbaren Zyklus ständig wechselnder Kode aktuell. Dieser Kode ist wegen der Korrelation mit dem jeweils vorausgegangenen Signaldialog jedoch nur den beiden miteinander kommunizierenden Übertragungseinrichtungen bekannt und kann auch nur von ihnen auf Vereinbarkeit geprüft werden.

Dadurch liegt ein Sicherungssystem vor, welches in vorteilhafter Weise einen extrem hohen Sicherheitsfaktor für dessen Betriebsführung bietet und welches durch Unbefugte wegen des ständig wechselnden Kodes sowie wegen des nicht ermittelbaren Arbeitszyklus' der beiden Übertragungseinrichtungen nicht täuschbar ist.

Das vorstehend beschriebene Sicherungssystem ist in dieser Form auch als Warneinrichtung für vergessene Gegenstände, beispielsweise Geldbörsen bzw. Terminkalender in einer Telefonzelle, oder als Sicherungssystem für Erwachsene geeignet, welche ihre zu beaufsichtigenden Kinder in einer größeren Menschenmenge unter Kontrolle halten möchten.

Entsprechend der bevorzugten Ausführungsform der Erfindung sind die miteinander kommunizierenden Übertragungseinrichtungen des Sicherungssystems in Form einer Chipkarte oder als kleinformatiger Gebrauchsgegenstand, beispielsweise als Feuerzeug, ausgebildet. Dadurch sind sie als Massenartikel kostengünstig herstellbar und bieten u.a. ein weites Anwendungsfeld in Kombination mit einer Bankkarte, Kreditkarte oder Identitätskarte.

Bei der Herstellung der Übertragungseinrichtungen des Sicherungssystems als Massenartikel in Form einer Chipkarte ist ein mehrschichtiger Aufbau günstig, um der räumlichen Ausdehnung der verwendeten Stromversorgungsquellen, akustischen Signalgeber bzw. der Mittel zur Programmierung der ersten elektronischen Steuerungsmittel Rechnung tragen zu können.

Um den Aktionsbereich des Sicherungssystems auf einfache Weise zu erweitern, werden entsprechend einer anderen günstigen Weiterbildung der Erfindung mehrere, gleichartig ausgebildete Übertragungseinrichtungen maximal im Abstand der größten Reichweite der eingesetzten Sender zueinander an Kontrollpunkten positioniert. Der oder die zu sichernden Gegenstände sind jeweils mit einer Übertragungseinrichtung versehen. Bei unberechtigtem Verlassen des erlaubten Bereichs reagiert mindestens eine der Übertragungseinrichtungen mit einer Alarmauslösung.

Um zu verhindern, daß bei einem erweiterten Aktionsbereich des Sicherungssystems der Dialog der Paare der jeweils miteinander kommunizierenden Übertragungseinrichtungen, beispielsweise durch eine Frequenzüberlagerung oder Interferenzerscheinung, gestört wird, erfolgt durch die zweiten elektronischen Mittel eine automatische Verschiebung des Dialog-Zeitfensters für das jeweilige Paar. Dies ist problemlos möglich, da bei einer Zykluszeit von vorzugsweise 1 s für den Zufallsgenerator und einer Sendezeit von etwa 500 µs in einem sogenannten Staggerbetrieb mehr als eintausend unterschiedliche Zeitfenster realisiert werden können. Die Verschiebung des zur Übertragung von Kontrollsignal bzw. Quittungssignal verwendeten Zeitfensters erfolgt hierbei vorzugsweise zufällig, um zu verhindern, daß zwei Paare von Übertragungseinrichtung ihr Übertragungsfenster gemeinsam verschieben, was trotz der laufenden Verschiebung zu einer ständigen Überlagerung und gegenseitigen Störung führen würde.

Auch bei einer derartigen zufälligen Verschiebung des zur Übertragung von Kontroll- bzw. Quittungssignal vorgesehenen Zeitfensters ist es jedoch möglich, daß die Zeitfenster zweier Paare von Übertragungseinrichtungen kurzfristig zusammenfallen. In diesem Fall wäre die Übertragung zwischen den Übertragungseinrichtungen gestört, so daß der Austausch von Kontroll- und Quittungssignal nicht funktionieren würde. In der bevorzugten Ausführungsform dieser Variante ist deshalb vorgesehen, den Alarm erst dann auszulösen, wenn das Quittungssignal auch nach einer vorgegebenen Anzahl von Kontrollsignalen ausbleibt, damit kurze Übertragungsstörungen nicht zu einer Alarmauslösung führen. Die Übertragungseinrichtungen weisen hierzu ein Speicherelement auf, in dem die Zahl der bereits ausgebliebenen Quittungssignale abgespeichert wird. Beim Ausbleiben eines Quittungssignals wird der Inhalt dieses Speicherelements inkrementiert, wohingegen das Speicherelement beim Erscheinen eines Quittungssignals zurückgesetzt wird. Weiterhin weisen die Übertragungseinrichtungen in dieser Variante der Erfindung eine Vergleichereinheit auf, die den Inhalt des Speicherelements mit einem vorgegebenen Grenzwert vergleicht und beim Überschreiten des Grenzwerts Alarm auslöst.

In einer weiteren Variante der Erfindung ist vorgesehen, senderseitig unterschiedlich winkelmodulierte Impulse zu erzeugen und empfängerseitig durch entsprechend angepaßte Dispersionsfilter zu komprimieren. Liegt das informationstragende Signal in binärer Form als Bitfolge vor, so kann bei einem logischen LOW-Pegel ein Impuls mit einer während der Impulsdauer linear zunehmenden Frequenz übertragen werden, wohingegen bei einem logischen HIGH-Pegel ein Impuls mit einer während der Impulsdauer linear abnehmenden Frequenz übertragen wird. Empfängerseitig sind in diesem Fall zwei Dispersionsfilter mit entsprechend angepaßten frequenzabhängigen Laufzeitcharakteristiken erforderlich.

Durch die Übertragung unterschiedlich winkelmodulierter Impulse ist es zum einen möglich, sowohl logische LOW-Pegel als auch logische HIGH-Pegel aktiv zu übertragen, was zu einer Erhöhung der Störsicherheit beiträgt. Zum anderen eröffnet sich hierdurch die Möglichkeit, mit jedem Übertragungsimpuls eine größere Datenmenge zu übertragen. Stehen beispielsweise acht verschiedene Impulse zur Übertragung zur Verfügung, so kann mit jedem Impuls eine Datenmenge von log₂8=3 Bit übertragen werden.

Vorteilhafte Weiterbildungen der Erfindung sind in den Unteransprüchen gekennzeichnet bzw. werden nachstehend zusammen mit der Beschreibung der bevorzugten Ausführung der Erfindung anhand der Figuren näher dargestellt. Es zeigen:
- Figur 1: ein erfindungsgemäßes Sicherungssystem mit zwei miteinander kommunizierenden Übertragungseinrichtungen ebenfalls als Blockschalbild,
- Figur 2: einen Sender der in den Figuren 1 und 2 dargestellten Übertragungseinrichtungen als Blockschaltbild,
- Figur 3: einen Empfänger der Übertragungseinrichtungen aus Figur 1 und 2 als Blockschaltbild,
- Figur 4: eine schematische Darstellung des Grundprinzips des erfindungsgemäßen Meßsystems beim Einsatz als Diebstahlsicherungssystem,
- Figur 5: eine vorteilhafte Weiterbildung der in Figur 4 dargestellten Diebstahlsicherungssystems,
- Figur 6: die Darstellung eines Blockschaltbildes einer der miteinander kommunizierenden Übertragungseinrichtungen des erfindungsgemäßen Diebstahlsicherungssystems,
- Figur 7: die Darstellung einer Einzelheit aus dem Blockschaltbild gemäß Figur 6,
- Figur 8: die bevorzugte Ausführungsform der kommunizierenden Übertragungseinrichtungen des erfindungsgemäßen Diebstahlsicherungssystems, sowie
- Figur 9: den Aufbau einer der in Figur 5 gezeigten, miteinander kommunizierenden Übertragungseinrichtungen in Explosivdarstellung.

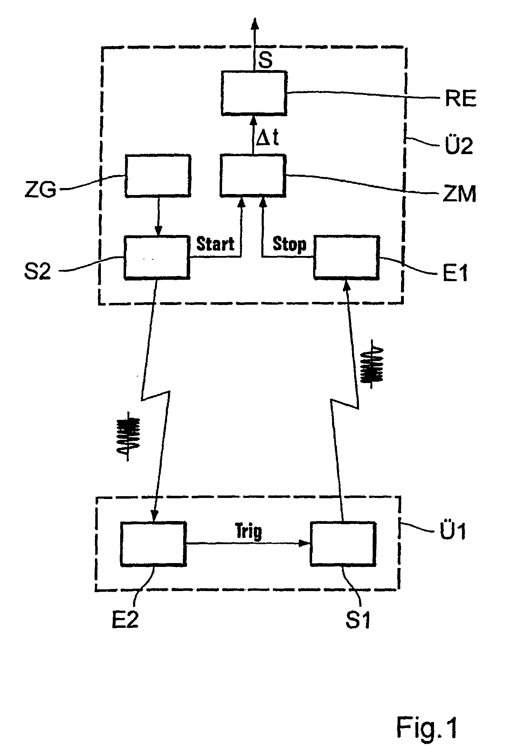

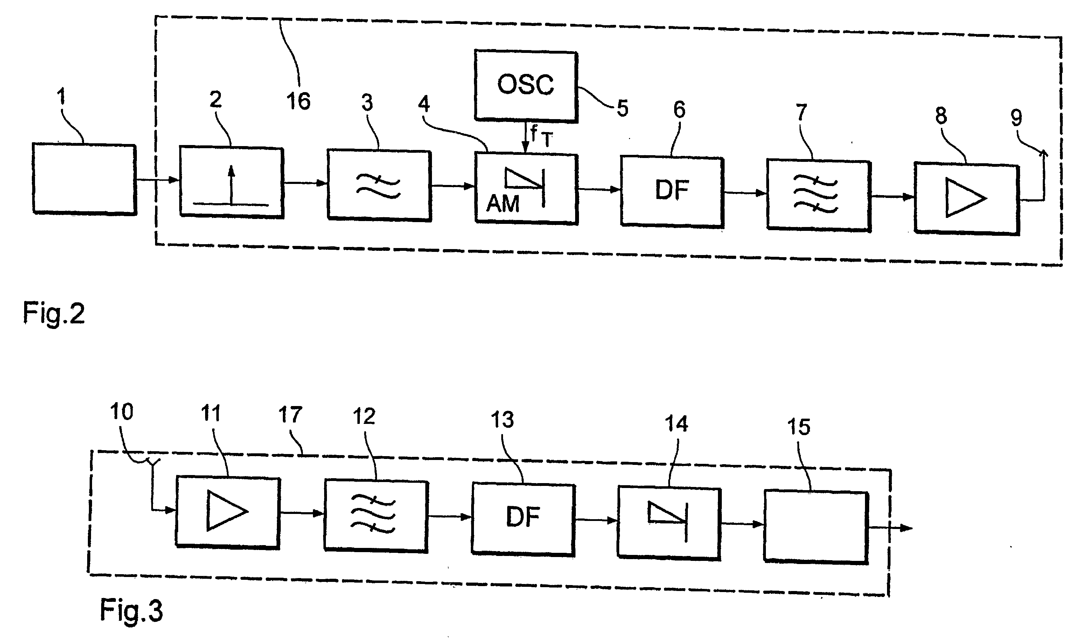

Das in Figur 1 in Form eines Blockschaltbildes dargestellte Sicherungssystem ermöglicht die Bestimmung der Entfernung zwischen der ersten Übertragungseinrichtung Ü1 und der zweiten Übertragungseinrichtung Ü2 durch Messung der Laufzeit eines Signals, das von dem Sender S1 der ersten Übertragungseinrichtung Ü1 erzeugt und von dem Empfänger E1 der zweiten Übertragungseinrichtung erfaßt wird. Der Aufbau von Sender S1 und Empfänger E1 sowie die Art der zwischen den beiden Übertragungseinrichtungen Ü1, Ü2 übertragenen Signale ist detailliert in der Beschreibung zu den Figuren 2 und 3 erläutert. Für eine Laufzeitmessung ist es erforderlich, daß die empfangende Übertragungseinrichtung Ü2 eine Information über den Zeitpunkt der Signalabgabe in der ersten Übertragungseinrichtung erhält. Die Signalabgabe durch den Sender S1 erfolgt deshalb jeweils zu vorgegebenen Zeitpunkten, die durch den Zeitgeber ZG bestimmt werden. Wichtig ist hierbei, daß der Zeitgeber ZG1 eine hohe Genauigkeit aufweist, da zeitliche Abweichungen von dem vorgegebenen Zeitpunkt der Signalabgabe zu Fehlern bei der Laufzeitmessung führen und damit die Entfernungsmessung verfälschen. Der Zeitgeber ZG erzeugt also ein hochpräzises periodisches Taktsignal, das den Sender S1 zur Abgabe eines Impulses veranlaßt.

Die einzelnen Meßvorgänge erfolgen hierbei in vorgegebenen Zeitabständen und werden jeweils durch den Zeitgeber ZG eingeleitet, der den Sender S2 zur Abgabe eines Meßsignals antriggert, das von dem Empfänger E2 der anderen Übertragungseinrichtung Ü1 nach einer entfernungsabhängigen Signallaufzeit erfaßt wird. Der Empfänger E2 triggert daraufhin den Sender S1 zur Abgabe eines Quittungssignals an, das wiederum nach einer entfernungsabhängigen Signallaufzeit von dem Empfänger E1 aufgenommen wird.

Die Messung der Signallaufzeit erfolgt durch das Zeitmeßgerät ZM, das eingangsseitig mit dem Sender S2 verbunden ist, um die Zeitmessung bei der Abgabe des Meßsignals durch den Sender S2 zu starten. Darüber hinaus ist das Zeitmeßgerät ZM mit dem Empfänger E1 verbunden, um die Zeitmessung beim Eintreffen des Quittungssignals zu beenden. Das Zeitmeßgerät ZM ermittelt also die Signallaufzeit Δt zwischen der Abgabe des Meßsignals durch den Sender S2 und der Aufnahme des Quittungssignals durch den Empfänger E1. Anschließend wird die gemessene Signallaufzeit Δt der Recheneinheit RE zugeführt, die hieraus und aus der als bekannt vorausgesetzten Ausbreitungsgeschwindigkeit der ausgetauschten Signale die Entfernung s zwischen den beiden Übertragungseinrichtungen berechnet.

Der Aufbau der Sender S1, S2 in den vorstehend beschriebenen Übertragungseinrichtungen Ü1, Ü2 ist detailliert in Figur 2 und 3 dargestellt. Der Sender 16 ermöglicht die Übertragung eines hochfrequenten Impulses über eine störungsbehaftete Übertragungsstrecke an den in Figur 3 dargestellten Empfänger 17, wobei die Übertragung bei vorgegebenen Anforderungen an Reichweite und Störsicherheit vorteilhaft mit einer relativ geringen Sendeleistung erfolgen kann, was zum einen bei einem Batteriebetrieb des Senders die Batterielebensdauer erhöht und zum anderen die Umweltbelastung durch elektromagnetische Strahlung - auch als Elektro-Smog bezeichnet - verringert. Darüber hinaus weist der Sender aufgrund der relativ geringen Sendeleistung ein verringertes Störpotential anderen Nachrichtenübertragungssystemen gegenüber auf.

Ein am Eingang des Senders 16 erscheinender und von dem Zeitgeber 1 erzeugter Triggerimpuls wird im Sender 16 zunächst einem Pulsformer 2 zugeführt, der die relativ breiten Rechteckimpulse des Eingangssignals in kurze Nadelimpulse transformiert, die Dirac-Impulse nachbilden sollen.

Die auf diese Weise erzeugten Nadelimpulse werden anschließend einem Tiefpaßfilter 3 zugeführt, dessen Laufzeitverhalten kurz vor der Grenzfrequenz eine Überhöhung aufweist, so daß die einzelnen Nadelimpulse jeweils in si-Impulse transformiert werden, deren Form der bekannten si-Funktion si(x) = ^{sin x} / ₓ entspricht.

Im Anschluß daran werden die si-Impulse einem Amplitudenmodulator 4 zugeführt, der dieses Signal auf eine Trägerschwingung der Frequenz f_{T} aufmoduliert, die von dem Oszillator 5 erzeugt wird, so daß am Ausgang des Amplitudenmodulators 4 Trägerfrequenzimpulse mit einer si-förmigen Hüllkurve erzeugt werden.

Dem Amplitudenmodulator 4 ist ein Dispersionsfilter 6 nachgeschaltet, welches das modulierte Trägerfrequenzsignal entsprechend seiner linear fallenden Winkelmodulationscharakteristik filtert, wobei die Winkelmodulationscharakteristik das frequenzabhängige differentielle Laufzeitverhalten des Dispersionsfilters 6 wiedergibt. Am Ausgang des Dispersionsfilters 6 erscheinen deshalb linear frequenzmodulierte Impulse mit konstanter Amplitude, deren Frequenz während der Impulsdauer von einem oberhalb der Trägerfrequenz f_{T} liegenden Wert f_{T}+Δf/2 auf einen unterhalb der Trägerfrequenz f_{T} liegenden Wert f_{T}-Δf/2 abfällt.

Die auf diese Weise erzeugten Impulse werden nachfolgend einem Bandpaßfilter 7 zugeführt, dessen Mittenfrequenz gleich der Trägerfrequenz f_{T} der frequenzmodulierten Impulse ist, so daß außerhalb des Übertragungsbands liegende Signale, die beispielsweise von Störungen herrühren, ausgefiltert werden. Das bandpaßbegrenzte Signal wird schließlich über einen Sendeverstärker 8 der Antenne 9 zugeführt und abgestrahlt.

Der in Figur 3 dargestellte Empfänger 17 ermöglicht den Empfang des von dem vorstehend beschriebenen Sender 16 abgestrahlten linear frequenzmodulierten Signals sowie die Demodulation und Rückgewinnung des Eingangsimpulses.

Hierzu wird das über die Empfängerantenne 10 empfangene Signal zunächst einem Vorverstärker 11 und nachfolgend einem Bandpaßfilter 12 zugeführt, dessen Mittenfrequenz gleich der Trägerfrequenz f_{T} des bandpaßbegrenzten Sendesignals ist, so daß Störsignale aus anderen Frequenzbereichen aus dem empfangenen Signal ausgefiltert werden.

Das empfangene Signal besteht also aus linear frequenzmodulierten Impulsen, wobei die Frequenz entsprechend der senderseitig verwendeten Modulationscharakteristik während der Impulsdauer linear von einem oberhalb der Trägerfrequenz liegenden Wert f_{T}+Δf auf einen unterhalb der Trägerfrequenz f_{T} liegenden Wert f_{T}-Δf abfällt.

Das empfangene Signal wird dann einem Dispersionsfilter 13 zugeführt, das die einzelnen Impulse des Eingangssignals zeitlich komprimiert, was zu einer entsprechenden Amplitudenerhöhung und damit einem verbesserten Signal-/Rauschabstand führt.

Die Impulskompression nutzt hierbei die Tatsache, daß die höherfrequenten Signalanteile der Impulse aufgrund der senderseitig durchgeführten linearen Frequenzmodulation am Eingang des Dispersionsfilters 13 vor den niederfrequenten Signalanteilen erscheinen. Das Dispersionsfilter 13 gleicht deshalb den "Vorsprung" der höherfrequenten Signalanteile aus, indem diese in dem Dispersionsfilter stärker verzögert werden als die niederfrequenten Signalanteile. Das frequenzabhängige differentielle Laufzeitverhalten des Dispersionsfilters 13 ist hierbei derart an die Modulationscharakteristik der senderseitig durchgeführten Frequenzmodulation angepaßt, daß die spektralen Signalanteile des empfangenen Signals im wesentlichen koinzident am Ausgang des Dispersionsfilters 13 erscheinen und sich somit zu einem Signal mit jeweils impulsweise si-förmiger Hüllkurve überlagern, wobei die Amplitude der einzelnen Impulse gegenüber dem empfangenen linear frequenzmodulierten Signal wesentlich vergrößert ist.

Das Ausgangssignal des Dispersionsfilters 13 wird dann einem Demodulator 14 zugeführt, der das Signal von der hochfrequenten Trägerschwingung befreit und ein diskretes Ausgangssignal mit nadelförmigen Impulsen erzeugt.

Im Anschluß daran wird aus den nadelförmigen Impulsen mittels eines Impulsformers 15 der ursprüngliche senderseitig erzeugte Impuls zurückgewonnen.

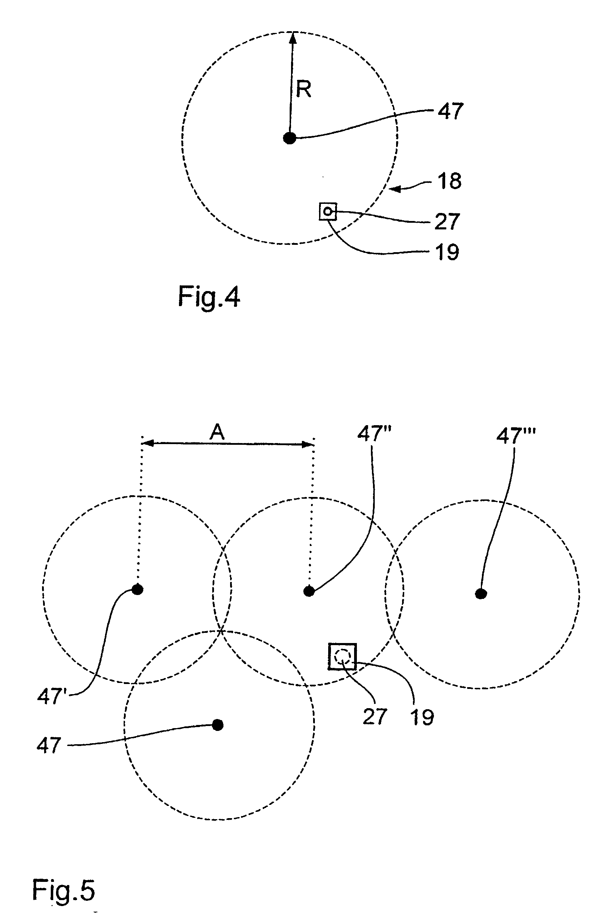

Figur 4 zeigt eine Variante des erfindungsgemäßen Sicherungssystems zum Einsatz als Diebstahlsicherungssystem. Das erfindungsgemäße Sicherungssystem 18 weist zwei miteinander drahtlos, wechselweise unter Verwendung kodierter Signale kommunizierende Übertragungseinrichtungen 27 und 47 auf. Die erste Übertragungseinrichtung 27 ist an dem zu sichernden Gegenstand 19 befestigt, die zweite Übertragungseinrichtung 47 befindet sich an einem kontrollierbaren Ort. Die Kommunikation zwischen den Übertragungseinrichtungen 27 und 47 ist entsprechend einer eingestellten Reichweite der in den Übertragungseinrichtungen verwendeten Sendeanordnungen nur innerhalb des (mittels einer gestrichelten Linie dargestellten) Kreises möglich. Wird der Signalempfang unterbrochen, da der zu sichernde Gegenstand 19 in unbefugter Weise aus dem durch den Kreis mit dem Radius R begrenzten Bereich entfernt worden ist, oder kann ein gesendetes Signal aufgrund einer unbefugt vorgenommenen und deshalb fehlerhaften Kodierung nicht als "ordnungsgemäßes" Signal erkannt werden, wird zumindest in der als "Zentrale" fungierenden Übertragungseinrichtung 47 ein Alarm ausgelöst.

Für den Fall, daß der Aktionsbereich des Sicherungssystems 18 gemäß Figur 4 erweitert werden soll, sind entsprechend der Darstellung in Figur 5 mehrere, gleichartig ausgebildete, Sende- und Empfangsanordnungen aufweisende Übertragungseinrichtungen 47, 47', 47" und 47" ' maximal im Abstand der größten Reichweite der eingesetzten Sendeanordnungen zueinander an Kontrollpunkten positioniert.. Der zu sichernde Gegenstand 19 trägt eine weitere Übertragungseinrichtung 27 und kann ohne Gefahr einer Alarmauslösung in dem durch die Kreise begrenzten Bereich bewegt werden, da die Übertragungseinrichtung 27 mit mindestens einer der Übertragungseinrichtungen 47, 47', 47" oder 47"' kommunizieren kann.

Die Lösung ist beispielsweise in einem Unternehmen anwendbar, wenn wichtige, in einem Aktenordner abgelegte Dokumente nicht nur in einer Fachabteilung, sondern in mehreren Fachabteilungen eines Unternehmensbereiches zum Austausch verfügbar sein sollen, jedoch ein unerlaubtes Entfernen dieser Akten aus den zur Einsichtnahme berechtigten Fachabteilungen kontrolliert bzw. verhindert werden muß. Der zu "beaufsichtigende" Aktenordner 19 ist mit einer ersten Übertragungseinrichtung 27 versehen. Bei Verlassen des erlaubten Bereichs erfolgt bei mindestens einer der zweiten Übertragungseinrichtungen 47, 47', 47" oder 47"' eine Alarmauslösung.

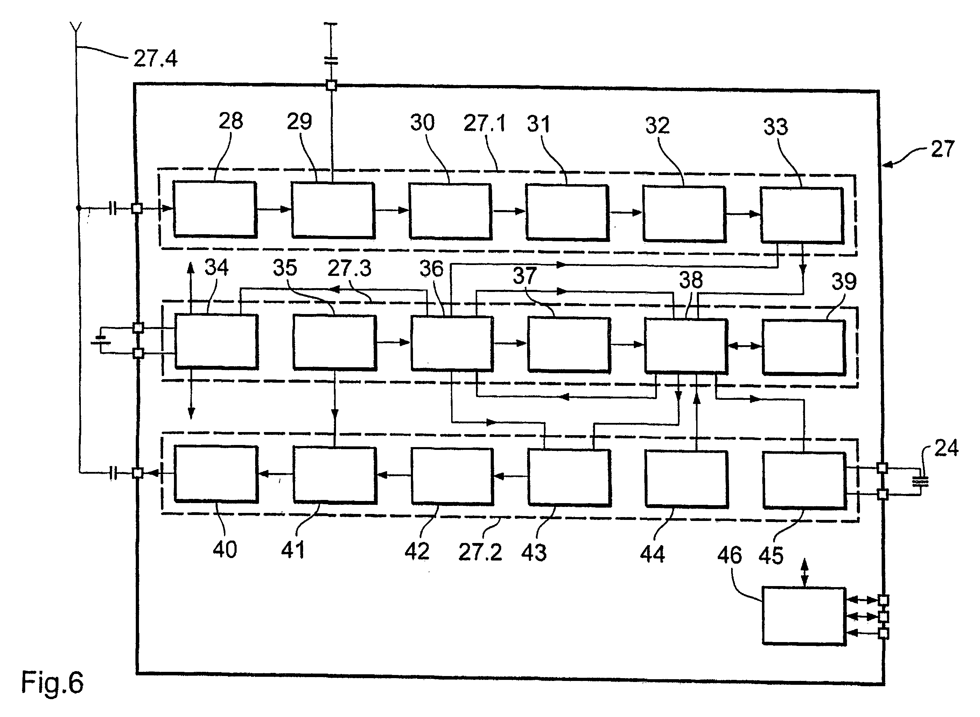

Das in Figur 6 gezeigte Blockschaltbild einer von zwei miteinander drahtlos und unter Verwendung eines Kodes kommunizierenden Übertragungseinrichtungen 27 weist eine Empfangsanordnung 27.1, eine Sendeanordnung 27.2 und erste elektronische Steuerungsmittel 27.3 auf. Die zweite der miteinander kommunizierenden Übertragungseinrichtungen (vergleiche die Position 47 in Figur 4) ist in gleicher Weise aufgebaut.

Das der Empfangsanordnung 27.1 der ersten Übertragungseinrichtung 27 über die Antennenanlage 27.4 zugeführte, von der Sendeanordnung einer zweiten Übertragungseinrichtung (vergleiche Position 47 in Figur 4) gesendete Signal besteht aus Impulsen mit einer während der Impulsdauer linear zunehmenden Frequenz. Dies bedeutet, daß die niederfrequenten Signalanteile der einzelnen Impulse an der Antenne 27.4 jeweils vor den höherfrequenten Signalanteilen erscheinen. Das über die Antenne 27.4 empfangene Signal wird zunächsteinem als Oberflächenwellenfilter ausgeführten Dispersionsfilter 28 zugeführt, das eine frequenzabhängige Signallaufzeit aufweist. Die Filtercharakteristik dieses Dispersionsfilters 28 ist hierbei derart an die Modulation der von der anderen Übertragungseinrichtung abgestrahlten Impulse angepaßt, daß die spektralen Signalanteile der frequenzmodulierten Impulse aufgrund der frequenzabhängig unterschiedlichen Signallaufzeit durch das Dispersionsfilter 28 an dessen Ausgang im wesentlichen koinzident und folglich mit geringer zeitlicher Unschärfe erscheinen. Das Dispersionsfilter 28 führt also zu einer zeitlichen Komprimierung der empfangenen Impulse, was wegen der damit verbundenen geringen zeitlichen Unschärfe der gefilterten Impulse eine verbesserte Laufzeitmessung zwischen den beiden Übertragungseinrichtungen und damit eine genauere Entfernungsmessung ermöglicht. Darüber hinaus führt die zeitliche Komprimierung durch das Dispersionsfilter 28 zu einer entsprechenden Amplitudenerhöhung der empfangenenn Impulse im Empfänger. Dies ermöglicht eine Verringerung der Sendeleistung und damit eine Erhöhung der Batterielebensdauer oder einen Betrieb auch in gestörten Umgebungen.

Das auf diese Weise komprimierte Signale wird anschließend von einem HF-Verstärker 29 verstärkt und von einem AM-Demodulator 30 demoduliert. Daraufhin wird das Signal einem weiteren Tiefpaßfilter 31 zugeleitet und nach Passieren einer Diskriminatoreinheit 32 einem Dekoder 34 zugeführt.

Der Ausgang des Dekoders 34 ist mit dem Eingang eines Kode-Managers 38, einer für die wechselnde Kodierung der Sendesignale erforderlichen und den ersten elektronischen Steuerungsmittel 27.3 zugeordneten Baugruppe, verbunden. Für die exakte zeitliche Auslösung der Sendesignale, der zeitgenauen Zuordnung der empfangenen Sendesignale sowie der Steuerung des Dekoders 34 ist ein durch einen Oszillator 35 gesteuerter Taktgeber 36 vorgesehen. Dieser Taktgeber steuert gleichermaßen einen für die Generierung der Sendesignale vorgesehenen Zufallsgenerator 37, dessen Ausgangssignale im Kode-Manager 38 den jeweils aktuellen Kode zugewiesen bekommen. Dieser dem Sendesignal in einem der Sendeanordnung 27.2 der Übertragungseinrichtung 10 zugeordneten Kodierer 43 aufgeprägte Kode wird gleichzeitig in der Speichereinheit 39 abgelegt und von dort zwecks Bildung eines für den nächsten Sende- und Empfangszyklus erforderlichen neuen Kodes entsprechend der Steuerung durch den Taktgeber 36 von dem Kode-Manager 38 abgefordert.

Zur Erhöhung des Sicherheitsfaktors für einen störungsfreien Betrieb des Sicherungssystems sind in den miteinander kommunizierenden Übertragungseinrichtungen erste elektronische Steuerungsmittel vorgesehen, durch welche die Kodierung der Sendesignale nach jedem Sende- und Empfangszyklus verändert wird.

Die Kodierung wird nach folgendem Prinzip durchgeführt:

Das von der Sendeanordnung 27.2 der Übertragungseinrichtung 27 zu emittierende Signal wird zunächst durch den Zufallsgenerator 37 erzeugt und danach kodiert. Der Kode Kₙ₋₁ wird aus einem bereits gesendeten Signal gebildet, um auf diese Weise einen zwar statistisch schwankenden, aber von der jeweils vorherigen Betriebsführung der beiden kommunizierenden Übertragungseinrichtungen 27, 47 abhängigen Kode als Schlüssel zu erhalten, welcher in der Speichereinheit 39 abrufbar eingespeichert wird. Das zu sendende Signal wird nach dem vorangegangenen Kode Kₙ₋₁ verschlüsselt und gesendet. Gleichzeitig wird durch die ersten elektronischen Mittel 27.3 der ersten Übertragungseinrichtung aus der aktuellen Zufallszahl und dem Kode Kₙ₋₁ ein neuer Kode Kₙ gebildet, welcher zwecks Abspeichern dem Speicher 39 zugeführt wird. Das von der Sendeanordnung stammende Signal wird von der Empfangsanordnung der zweiten Übertragungseinrichtung über den geltenden Schlüssel Kₙ₋₁, welcher aus der vorherigen Kommunikation bekannt ist, entschlüsselt und auf Vereinbarkeit geprüft. Das Ergebnis wird in der Empfangsanordnung der zweiten Übertragungseinrichtung 47 anerkannt, abgespeichert und zur Bildung eines neuen Kodes Kₙ herangezogen, welchen die Sendeanordnung der ersten Übertragungseinrichtung bereits vor der Signalabgabe gebildet hat. Die Sendeanordnung der zweiten Übertragungseinrichtung 47 generiert über den entsprechenden Zufallsgenerator ein neues Sendesignal, kodiert es nach Kₙ und sendet dieses zu der Empfangsanordnung 27.1 der ersten Übertragungseinrichtung 27. Gleichzeitig wird dabei der Kode Kₙ₊₁ gebildet und abgespeichert. Die Empfangsanordnung der ersten Einrichtung kann das von der zweiten Übertragungseinrichtung gesendete Signal dekodieren, da sie selbst den Kode Kₙ gebildet hat.

Die einzelnen Impulse des von dem Kodierer 43 erzeugten Kodes werden nachfolgend moduliert und über die Antenne 27.4 abgestrahlt. Die Modulation hat hierbei zum einen die Aufgabe, das von dem Kodierer 43 erzeugte Signal auf das von dem Oszillator 35 erzeugte hochfrequente Trägersignal aufzuprägen, was Voraussetzung für eine drahtlose Übertragung ist. Zum anderen wird hierbei erreicht, daß die abgestrahlten Impulse eine während der Impulsdauer linear zunehmende Frequenz aufweisen. Dies ist erforderlich, um die Impulse anschließend im Empfänger der anderen Sende/Empfangsanordnung mittels eines Dispersionsfilters komprimieren zu können.

Das von dem Kodierer 43 erzeugte Signal besteht jeweils aus nadelförmigen Impulsen, die Dirac-Stöße nachbilden, und wird einem Tiefpaßfilter 42 zugeführt, dessen Filterkennlinie kurz vor Erreichen der Grenzfrequenz eine Überhöhung aufweist und jeden Dirac-Impuls somit in einen si-Impuls transformiert, dessen Form durch die bekannte si-Funktion si(x)=^{sinx}/ₓ beschrieben wird. Das si-förmige Ausgangssignal des Tiefpaßfilters 42 wird anschließend auf einen Amplitudenmodulator 41 gegeben, der der von dem Oszillator 35 erzeugten Trägerschwingung eine si-förmige Hüllkurve aufprägt. Wird das auf diese Weise erzeugte Signal einem dispersiven Filter 40 zugeführt, so erscheint am Ausgang ein frequenzmodulierter Impuls. In dieser Variante der Erfindung erfolgt also senderseitig zunächst eines Expansion des relativ scharfen si-Impulses durch das Dispersionsfilter 40 in einen frequenzmodulierten Impuls, der gegenüber dem si-Impuls verlängert ist und eine entsprechend geringere Amplitude aufweist. Empfängerseitig erfolgt dann ebenfalls durch ein Dispersionsfilter wieder eine Kompression des Impulses mit einer entsprechenden Amplitudenerhöhung.

Der Kode-Manager 38 ist mittels einer Tastatur 44 programmierbar ausgebildet. Für die akustische Alarmanzeige 24 ist eine gesonderte Treiberstufe 45 vorgesehen, deren Ansteuerung über den Kode-Manager 38 erfolgt. Die Spannungsversorgung, welche intermittierend mit der Empfangsanordnung 27.1 und der Sendeanordnung 27.2 verbunden wird, ist mit 34 bezeichnet. Zwecks Anschluß peripherer Übertragungseinrichtungen ist ein Koppelbaustein 46 vorgesehen, über den das Alarmsignal auch an andere Stationen übertragen werden kann.

Da die beiden miteinander kommunizierenden Übertragungseinrichtungen 27, 47 seit der ersten Initialisierung die gleiche "Kodierungsvergangenheit" aufweisen und ihnen die zwar jeweils statistisch erzeugten, aber untereinander ausgetauschten Signale "bekannt" sind, ist die Kommunikation zwischen den beiden Übertragungseinrichtungen 27, 47 mit einem ständig wechselnden Kode durchführbar. Dieser Kode ist jedoch nur den beiden Übertragungseinrichtungen durch die Korrelation der vorausgegangenen Kodierungen verständlich, so daß ein Eingriff in die Kommunikation zwischen den Übertragungseinrichtungen durch Unbefugte mit an Sicherheit grenzender Wahrscheinlichkeit ausgeschlossen ist und das Sicherungssystem mit einem hohen Sicherheitsfaktor betrieben werden kann.

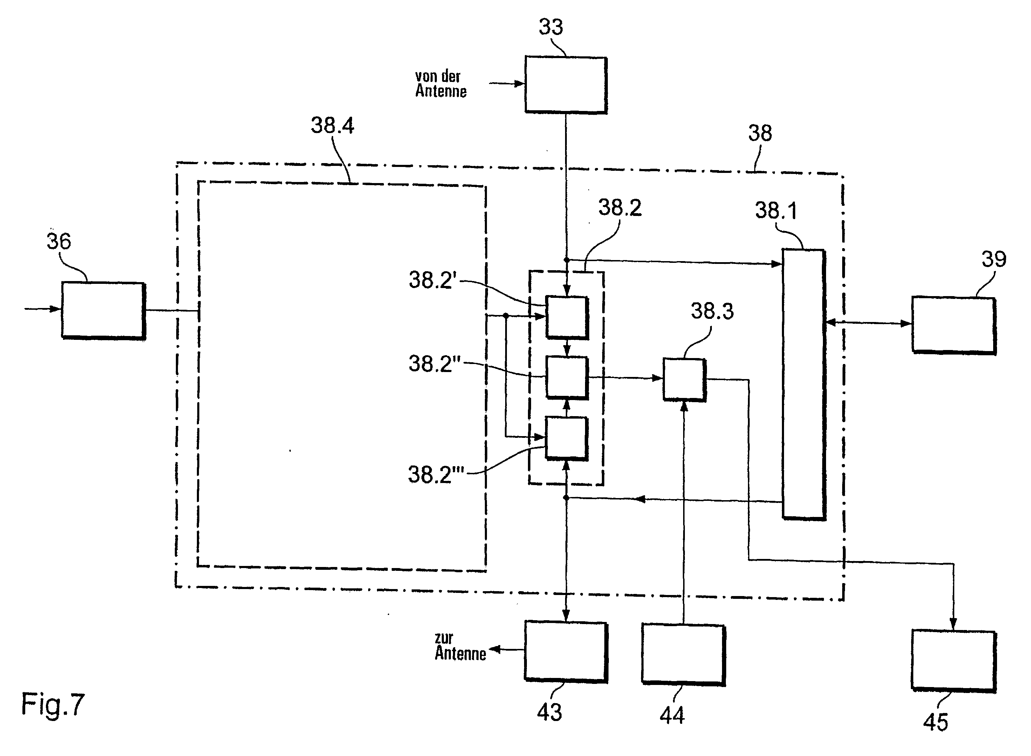

Die Darstellung in Figur 7 zeigt als Detail des Blockschaltbildes gemäß Figur 6 schaltungstechnische Einzelheiten 38.2 des Kode-Managers 38, welche für die Bestimmung des Abstandes zwischen den beiden miteinander kommunizierenden Übertragungseinrichtungen des Sicherungssystems erforderliche Laufzeitmessung vorgesehen sind. Die Zählstufen 38.2' und 38.2"' sind mit dem Taktgeber 36 verbunden und werden aktiviert bzw. gestoppt, wenn das kodierte Signal die entsprechende Sendeanordnung der ersten Übertragungseinrichtung verläßt bzw. das dadurch in der zweiten der miteinander kommunizierenden Übertragungseinrichtungen mittelbar ausgelöste Signal in der entsprechenden Empfangsanordnung der ersten Übertragungseinrichtung eintrifft (vergleiche die Position 27 (bzw. 47), 27.1, 27.2 in Figur 5). Das Zählergebnis wird in einer Summierstufe 38.2" erfaßt, deren Ausgang mit einem Vergleicher mit Sollwerteinstellung 38.3 verbunden ist. Die Sollwertvorgabe ist mittels einer Tastatur 44 eingebbar. Bei einer bestimmten, vorgebbaren Sollwertabweichung aktiviert der Vergleicher 38.3 die Treiberstufe 45 des akustischen Alarmgebers. Die für den Kode-Manager 38 vorgesehene Koppelstufe zum Speicher 39 ist mit 38.1 bezeichnet. Alle übrigen Funktionseinheiten des Kode-Managers 38 sind in dem Elektronik-Block 38.4 global zusammengefaßt.

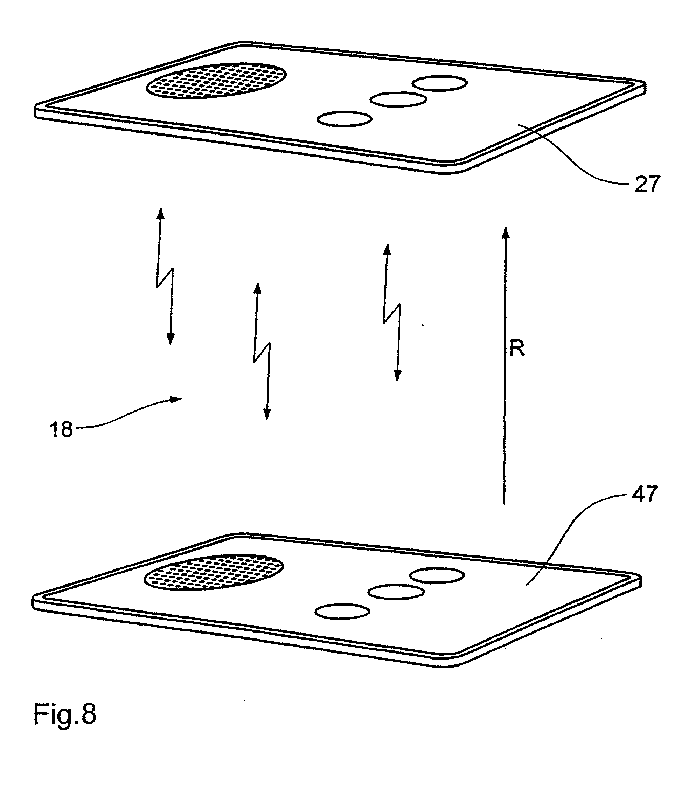

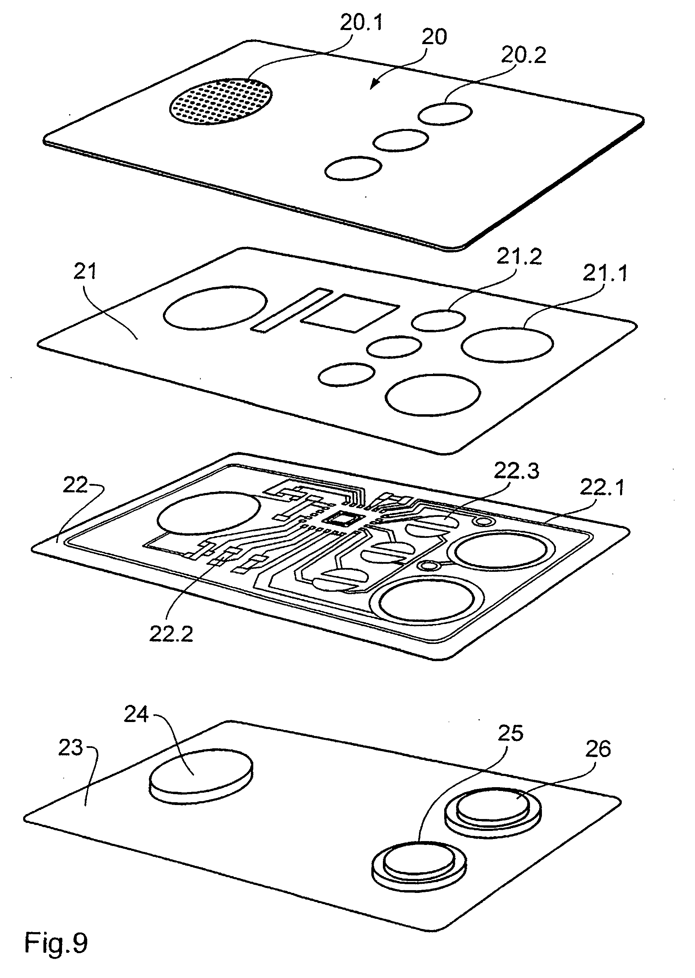

Die Figuren 8 und 9 zeigen in schematisierter Form ein Sicherungssystem 18 und den Aufbau der miteinander drahtlos kommunizierenden Übertragungseinrichtungen 27 und 47, welche sich in einem zulässigen Abstand R befinden.

Die jeweils gleichartig aufgebauten und als Chipkarte ausgebildeten Übertragungseinrichtungen 27, 47 sind aus vier Folien 20, 21, 22, 23 zusammengesetzt.

In die Deckfolie 20 sind eine Abdeckung 20.1 für den akustischen Alarmgeber 24 und Tasten 20.2 für die Programmierung des Kode-Managers (vergleiche Position 38 in den Figuren 6 und 7) eingearbeitet. Eine Distanzfolie 21 mit Aussparungen 21.1 und 21.2 für die Batterien 25, 26 und die Tasten 20.2 trennt die eine die gedruckte Schaltung nebst den elektronischen Baugruppen 22.2 tragende Folie (PCB-Folie, Printed Circuit Board) 22 von der Deckfolie 20. Die Kontaktflächen für die Programmiertasten 20.2 sind mit 22.3 bezeichnet. Die Leiterbahn 22.1 stellt die für die drahtlose Kommunikation erforderliche Antenne (vergleiche Position 27.4 in Figur 6) dar. Auf der Bodenfolie 23 sind der akustische Alarmgeber 24 und die für die Spannungsversorgung erforderlichen Batterien 25 und 26 angeordnet.

Die Erfindung beschränkt sich in ihrer Ausführung nicht auf das vorstehend angegebene bevorzugte Ausführungsbeispiel. Vielmehr ist eine Anzahl von Varianten denkbar, welche von der dargestellten Lösung auch bei grundsätzlich anders gearteten Ausführungen Gebrauch macht. Insbesondere eignet sich das System in der beschriebene Weise auch als zur Überprüfung der Nähe von Personen und sogar als Identifikationssystem, wenn nämlich der Alarm bei unerwünschter Entfernung der Geräte voneinander ersetzt wird durch einen Alarm, wenn bei durch zusätzliche entsprechende Mittel festgestellter Annäherung zweier Geräte der entsprechenden Bauart keine Kode-Übereinstimmung festgestellt wird.

Insbesondere kann auch eine der Karten stationär angeordnet sein oder mit einem Verkehrsmittel oder Fahrzeug fest verbunden sein, um dessen Bewegungsradius zu begrenzen. Dabei eignet sich die Erfindung auch für Systeme, bei denen ein Berechtigungsnachweis übermittelt werden soll, der für dritte mithörende Systeme nicht kopierbar sein soll, um eine Nachahmung des Kodes zu verhindern. Eine weitere Ausführungsform erstreckt sich auf Varianten, bei denen drei oder mehr Geräte bezüglich der Signalübertragung nach Art eines Rings miteinander verknüpft sind.

Die Erfindung beschränkt sich in ihrer Ausführung nicht auf die vorstehend angegebenen bevorzugten Ausführungsbeispiele. Vielmehr ist eine Anzahl von Varianten denkbar, welche von der dargestellten Lösung auch bei grundsätzlich anders gearteten Ausführungen Gebrauch macht.

Wenn die Abstandsbestimmung zwischen mehreren beweglichen und festen Bezugspunkten, beispielsweise bei Kraftfahrzeuggen im Verhältnis zu festen Funkbaken erfolgt, kann das erfindungsgemäße System auch als Navigationssystem verwendet werden, wobei mit aus den ermittelten Abständen mit einfachen geometrischen Beziehungen die jeweilige räumliche Position bestimmt werden kann (Hyperbelnavigation).

## Patentansprüche

1. Sicherungssystem (1) zur Detektion des sowohl Entfernens eines Gegenstandes oder einer Person aus einem vorgegebenen terrestrischen Bereich als auch zur Detektion des Eindringens eines Gegenstandes bzw. einer Person in den terrestrischen Bereich, mit
einer ersten Sende-/Empfangseinrichtung (Ü2) zur Erzeugung und drahtlosen Übertragung eines Kontrollsignals an eine separate zweite Sende-/Empfangseinrichtung (Ü1) sowie zum Empfang eines von der zweiten Sende-/Empfangseinrichtung (Ü1) auf den Empfang des Kontrollsignals hin erzeugten Quittungssignals, wobei eine der beiden Sende-/Empfangseinrichtungen (Ü2, Ü1) an oder in dem Gegenstand (2) bzw. der Person angeordnet ist sowie mit
einem Zeitmeßgerät (ZM), das zur Messung der Signallaufzeit zwischen der Abgabe des Kontrollsignals und dem Empfang des unmittelbar folgenden Quittungssignals eingangsseitig mit der ersten Sende-/Empfangseinrichtung (Ü2) verbunden ist und
einer eingangsseitig mit dem Zeitmeßgerät (ZM) verbundenen Auswerteeinheit (RE) zur Erzeugung eines Meßsignals (S) bzw. Alarmsignals in Abhängigkeit von der Signallaufzeit (Δt), **dadurch gekennzeichnet,**
**dass** mindestens eine der beiden Sende-/Empfangseinrichtungen (Ü2, Ü1) sendeseitig eine Signalquelle (23, 24, 25, 26) aufweist, die als Kontrollsignal bzw. als Quittungssignal Impulse erzeugt, die eine während der Impulsdauer monoton fallende oder steigende Frequenz aufweisen oder aus einer paarweisen Überlagerung derartiger Impulse bestehen, dass
die jeweils andere Sende-/Empfangseinrichtung (Ü2, Ü1) empfangsseitig zur zeitlichen Kompression der empfangenen Impulse mindestens ein Dispersionsfilter (6, 13) mit einer vorgegebenen frequenzabhängigen Signallaufzeit aufweist, die derart an die senderseitige Modulation angepaßt ist, daß die spektralen Signalanteile des Kontroll- bzw. Quittungssignals aufgrund der frequenzabhängig unterschiedlichen Signallaufzeit durch das Dispersionsfilter (6, 13) an dessen Ausgang im wesentlichen koinzident und somit mit geringer zeitlicher Unschärfe erscheinen, dass
zur Erzeugung der Impulse, die eine während der Impulsdauer monoton fallende oder steigende Frequenz aufweisen, die Signalquelle mittels eines Pulsumformers (2) das zu übertragende digitale Signal zunächst in eine Quasi-Dirac-Impulsfolge formt, und dass
die Quasi-Dirac-Impulsfolge durch einen Tiefpaßfilter (3) derart bandbegrenzt wird, daß die Quasi-Dirac-lmpulsfolge in eine Folge von Spaltimpulsen transformiert wird, deren Form durch eine si-Funktion (si(x) =^{sinx}/ₓ) beschrieben wird, welche anschließend auf eine Trägerfrequenz moduliert und dann dem Dispersionsfilter (6, 13) zugeführt wird.

2. Sicherungssystem nach Anspruch 1, **dadurch gekennzeichnet,**
**dass** die zweite Übertragungseinrichtung (Ü2) zur Abgabe eines den Meßvorgang einleitenden zweiten Meßsignals einen zweiten Sender (S2) aufweist,
**dass** die erste Übertragungseinheit (Ü1) zum Empfang des zweiten Meßsignals einen zweiten Empfänger (E2) aufweist, der ausgangssangseitig zur Triggerung der Abgabe des ersten Meßsignals durch den Empfang des zweiten Meßsignals mit dem ersten Sender (S1) verbunden ist und
**dass** das Zeitmeßgerät (ZM) zur Messung der Gesamtlaufzeit zwischen der Abgabe des zweiten Meßsignals und dem Empfang des ersten Meßsignals jeweils durch die zweite Übertragungseinheit (Ü2) eingangsseitig mit dem ersten Empfänger (E1) und dem zweiten Sender (S2) verbunden ist.

3. Sicherungssystem nach Anspruch 1 oder 2, **dadurch gekennzeichnet,**
**daß** eine der beiden Übertragungseinrichtungen (Ü1, Ü2) zur Detektion des Entfernens eines Gegenstandes (19) aus einem vorgegebenen Bereich oder zur Detektion des Eindringens des Gegenstandes (19) in den Bereich an oder in dem zu sichernden Gegenstand (19) angebracht ist,
**daß** dem Zeitmeßgerät (38.2) eine Auswerteeinheit (38.3) nachgeschaltet ist zur Erzeugung eines Alarmsignals in Abhängigkeit von der gemessenen Signallaufzeit.

4. Sicherungssystem nach einem der vorhergehenden Ansprüche, **dadurch gekennzeichnet, daß** dem Zeitmeßgerät (38.2) eine erste Recheneinheit nachgeschaltet ist, welche aus mehreren von dem Zeitmeßgerät (38.2) gemessenen Signallaufzeiten einen Mittelwert berechnet.

5. Sicherungssystem nach Anspruch 4, **dadurch gekennzeichnet,**
**daß** der Sender (S1, S2) bei mindestens einer Übertragungseinrichtung (Ü1, Ü2) zur Ermittlung der internen Signallaufzeit mit dem Empfänger (E1, E2) derselben Übertragungseinrichtung (Ü1, Ü2) dauerhaft verbunden oder durch ein Schaltelement während eines Kalibrierungsvorgangs verbindbar ist,
**daß** das Zeitmeßgerät (38.2) zur Zwischenspeicherung der internen Signallaufzeit zwischen der senderseitigen Abgabe des zweiten Meßsignals und der empfängerseitigen Detektion des ersten Meßsignals ausgangsseitig mit einem Speicherelement verbunden ist,
**daß** zur Berücksichtigung der internen Signallaufzeit bei der Entfernungsmessung eine zweite Recheneinheit vorgesehen ist, die eingangsseitig zur Aufnahme der internen Signallaufzeit mit dem Speicherelement und zur Aufnahme der Signallaufzeit zwischen der Abgabe des ersten Meßsignals und dem anschließenden Empfang des zweiten Meßsignals mit dem Zeitmeßgerät (38.2) verbunden ist.

6. Sicherungssystem nach Anspruch 1 oder 2, **dadurch gekennzeichnet, daß** mindestens eine Übertragungseinrichtung empfängerseitig ein Feldstärkemeßgerät aufweist, das ausgangsseitig zur Berechnung des Verhältnisses oder des Abstandes zwischen der Feldstärke der empfangenen Quittungssignale und der Feldstärke des Rauschens mit einer Recheneinheit verbunden ist, welche ausgangsseitig einen Regler ansteuert, der zur Regelung der Eingangsverstärkung mit einem empfängerseitig angeordneten Eingangsverstärker oder zur Regelung der Sendeleistung mit dem Sender verbunden ist.

7. Sicherungssystem nach Anspruch 1 oder 2, **dadurch gekennzeichnet, daß** die Signalquelle (16) zur Erzeugung von Dirac-Impulse nachbildenden Nadelimpulsen einen Impulsgenerator (2), ein Tiefpaßfilter (3), einen Amplitudenmodulator (4) zur Aufprägung der gefilterten Nadelimpulse auf eine Trägerschwingung sowie ein Dispersionsfilter (6) mit einer frequenzabhängigen Signallaufzeit in Reihe geschaltet aufweist.

8. Sicherungssystem nach Anspruch 1 oder 2, **dadurch gekennzeichnet, daß** die Signalquelle (23, 24, 25, 26) einen Impulsgenerator aufweist, der sägezahnförmige Impulse erzeugt und einen spannungsgesteuerten Oszillator zur Erzeugung der frequenzmodulierten Impulse ansteuert.

9. Sicherungssystem nach Anspruch 1 oder 2, **dadurch gekennzeichnet, daß** die Signalquelle zur sendeseitigen Erzeugung von frequenzmodulierten Impulsen einen digitalen Signalprozessor aufweist.

10. Sicherungssystem nach Anspruch 1 oder 2, **dadurch gekennzeichnet, daß** das empfangsseitig zur Impulskompression vorgesehene Dispersionsfilter (13) ein Oberflächenwellenfilter ist.

11. Sicherungssystem nach einem der vorangehenden Ansprüche, **dadurch gekennzeichnet, daß**. die Übertragungseinrichtungen (27, 47) erste elektronische Steuerungsmittel (27.3) mit mindestens einer Baueinheit (38) aufweisen, durch welche eine Änderung der Kodierung des Meßsignals nach jedem Sende- und Empfangszyklus in Form eines geschachtelten Wechselkodes erfolgt.

12. Sicherungssystem nach Anspruch 11, **dadurch gekennzeichnet, daß** die Baueinheit als getakteter und programmierbarer Kode-Manager (38) ausgebildet ist.

13. Sicherungssystem nach Anspruch 11, **dadurch gekennzeichnet, daß** ein Kode (Kₙ) für das jeweils zu sendende Signals vorgesehen ist, welcher aus einem Teil des Kodes (Kₙ₋₁) des Signals des vorausgegangenen Sende- und Empfangszyklus und einem zweiten, durch einen Zufallsgenerator (37) gebildeten Element (x) besteht.

14. Sicherungssystem nach Anspruch 1 oder 2, **dadurch gekennzeichnet, daß** die Übertragungseinrichtungen (27, 47) im wesentlichen gleichartig ausgebildet sind.

15. Sicherungssystem nach Anspruch 1 oder 2, **dadurch gekennzeichnet, daß** die Übertragungseinrichtungen (27, 47) zweite elektronische Mittel aufweisen, durch welche der Takt der Betriebsdauer und die Zuordnung von Zeitfenstern für die Übertragungseinrichtungen einstellbar ist.

16. Sicherungssystem nach Anspruch 15, **dadurch gekennzeichnet, daß** für die Betriebsdauer der Übertragungseinrichtungen (27, 47) ein Zeitraum von im wesentlichen 500 µs vorgesehen ist, welcher sich zyklisch wiederholt.

17. Sicherungssystem nach Anspruch 16, **dadurch gekennzeichnet, daß** für die Zykluszeit ein Zeitbereich von 500 ms bis 2 Sek vorgesehen ist.

18. Sicherungssystem nach Anspruch 1 oder 2, **dadurch gekennzeichnet, daß** mehrere, gleichartig aufgebaute Übertragungseinrichtungen (47, 47', 47", 47''') vorgesehen sind, um die Größe des Bewegungsraums des mit der Übertragungseinrichtung (27) gesicherten Gegenstandes (19) zu erweitern.

19. Sicherungssystem nach Anspruch 18, **dadurch gekennzeichnet, daß** sich die Übertragungseinrichtungen (47, 47', 47", 47" ') paarweise in einem relativen Abstand zueinander befinden, welcher maximal der doppelten Größe des Empfangsradius der Übertragungseinrichtungen (27, 47) entspricht.

20. Sicherungssystem nach Anspruch 1 oder 2, **dadurch gekennzeichnet, daß** die miteinander kommunizierenden Übertragungseinrichtungen (27, 47, 47', 47", 47" ') in Form einer Chipkarte oder in Form eines Gebrauchsgegenstandes geringer Größe, beispielsweise als ein Feuerzeug, ausgebildet sind.

21. Sicherungssystem nach Anspruch 20, **dadurch gekennzeichnet, daß** die Chipkarte einen mehrschichtigen Aufbau aufweist.

22. Sicherungssystem nach Anspruch 1 oder 2, **dadurch gekennzeichnet, daß** als drahtlose Verbindung zwischen den Übertragungseinrichtungen (27, 47) eine elektromagnetische oder akustische Kopplung vorgesehen ist.

23. Sicherungssystem nach Anspruch 1 oder 2, **dadurch gekennzeichnet, daß** die zweite Übertragungseinrichtung zur Überwachung einer Vielzahl von Fahrzeugen stationär angeordnet ist und die einzelnen zu überwachenden Fahrzeuge jeweils eine erste Übertragungseinrichtung aufweisen.

24. Sicherungssystem nach Anspruch 1 oder 2, **dadurch gekennzeichnet, daß** die Auswerteeinheit (38.3) zur Erzeugung des Alarmsignals ausgangsseitig mit einem Signallautsprecher (24) oder einer Signallampe verbunden ist.

25. Sicherungssystem nach Anspruch 1 oder 2, **dadurch gekennzeichnet, daß** die Auswerteeinheit (38.3) ausgangsseitig zur leitungsgebundenen Weitergabe des Alarmsignals mit einem Schnittstellenbaustein oder zur drahtlosen Übertragung des Meß- bzw. Alarmsignals mit einer Sendeeinheit verbunden ist.

## Claims

1. Security system (1) for detection of both the removal of an object or of a person from a predetermined terrestrial area and for detection of the entry of an object or of a person into the terrestrial area, having
a first transmitting/receiving device (U2) for producing wire-free transmission of a monitoring signal to a separate second transmitting/receiving device (U1) and for receiving an acknowledgement signal which is produced by the second transmitting/receiving device (U1) on reception of the monitoring signal, with one of the two transmitting/receiving devices (U2, U1) being arranged on or in the object (2) or the person, and having
a time measurement device (ZM), whose input side is connected to the first transmitting/receiving device (U2) in order to measure the signal delay time between the emission of the monitoring signal and the reception of the immediately subsequent acknowledgement signal, and
an evaluation unit (RE), whose input side is connected to the time measurement device (ZM), for producing a measurement signal (S) or alarm signal as a function of the signal delay time (Δt), **characterized**
**in that** at least one of the two transmitting/receiving devices (U2, U1) has a signal source (23, 24, 25, 26) on the transmission side, which signal source (23, 24, 25, 26) produces pulses as the monitoring signal or as the acknowledgement signal, which have a monotonically falling or rising frequency during the pulse duration, or consist of superimposition of such pulses in pairs, in that
the respective other transmitting/receiving device (U2, U1) has on the receiving side at least one dispersion filter (6, 13) for time compression of the received pulses, which dispersion filter (6, 13) has a predetermined frequency-dependent signal delay time, which is matched to the transmitter-end modulation such that the spectral signal components of the monitoring or acknowledgement signal appear, by virtue of the different frequency-dependent signal delay time by the dispersion filter (6, 13), essentially coincidentally at its output and thus appear with a small amount of time fuzziness, in that,
in order to produce the pulses which have a monotonically falling or rising frequency during the pulse duration, the signal source initially forms the digital signal to be transmitted by means of a pulse converter (2) into a quasi-Dirac pulse sequence, and in that
the quasi-Dirac pulse sequence is band-limited by a low-pass filter (3) such that the quasi-Dirac pulse sequence is transformed into a sequence of split pulses, whose form is described by an si function (si(x) = ^{sinx}/x), which is then modulated onto a carrier frequency and is then supplied to the dispersion filter (6, 13).

2. Security system according to Claim 1, **characterized**
**in that** the second transmission device (U2) has a second transmitter (S2) for emitting a second measurement signal which initiates the measurement process,
**in that** the first transmission unit (U1) has a second receiver (E2) for receiving the second measurement signal, which second receiver (E2) is connected on the output side to the first transmitter (S1) in order to trigger the emission of the first measurement signal as a result of the reception of the second measurement signal, and
**in that** the time measurement device (ZM) is connected on the input side to the first receiver (E1) and to the second transmitter (S2) in order to measure the total delay time between the emission of the second measurement signal and the reception of the first measurement signal, in each case by the second transmission unit (E2).

3. Security system according to Claim 1 or 2, **characterized**
**in that** in order to detect the removal of an object (19) from a predetermined area or in order to detect the entry of the object (19) into the area, one of the two transmission devices (U1, U2) is fitted to or in the object (19) to be protected,
**in that** the time measurement device (38.2) is followed by an evaluation unit (38.3) in order to produce an alarm signal as a function of the measured signal delay time.

4. Security system according to one of the preceding claims, **characterized in that** the time measurement device (38.2) is followed by a first computation unit, which calculates a mean value from a number of signal delay times measured by the time measurement device (38.2).

5. Security system according to Claim 4, **characterized**
**in that**, if there is at least one transmission device (U1, U2) for determining the internal signal delay time, the transmitter (S1, S2) is permanently connected to the receiver (E1, E2) of the same transmission device (U1, U2), or can be connected to it by means of a switching element during a calibration process,
**in that** the time measurement device (38.2) is connected on the output side to a memory element, in order to temporarily store the internal signal delay time between the transmitter-end emission of the second measurement signal and the receiver-end detection of the first measurement signal,
**in that**, in order to take account of the internal signal delay time during range measurement, a second computation unit is provided, which is connected on the input side to the memory element in order to record the internal signal delay time, and is connected to the time measurement device (38.2) in order to record the signal delay time between the emission of the first measurement signal and the subsequent reception of the second measurement signal.

6. Security system according to Claim 1 or 2, **characterized in that** at least one transmission device at the receiver end has a field strength measurement device, which is connected on the output side to a computation unit in order to calculate the ratio or the separation between the field strength of the received acknowledgement signals and the field strength of the noise, the output side of which computation unit drives a regulator, which is connected to an input amplifier, arranged at the receiver end, in order to control the input gain, or is connected to the transmitter in order to control the transmission power.

7. Security system according to Claim 1 or 2, **characterized in that**, in order to produce needle pulses which simulate Dirac pulses, the signal source (16) has a pulse generator (2), a low-pass filter (3), an amplitude modulator (4) for applying the filtered needle pulses to a carrier oscillation, and a dispersion filter (6) with a frequency-dependent signal delay time, connected in series.

8. Security system according to Claim 1 or 2, **characterized in that** the signal source (23, 24, 25, 26) has a pulse generator which produces sawtooth-waveform pulses and drives a voltage controlled oscillator in order to produce the frequency-modulated pulses.

9. Security system according to claim 1 or 2, **characterized in that** the signal source has a digital signal processor, in order to produce frequency-modulated pulses at the transmission end.

10. Security system according to Claim 1 or 2, **characterized in that** the dispersion filter (13) which is provided for pulse compression at the receiving end is a surface acoustic wave filter.

11. Security system according to one of the preceding claims, **characterized in that** the transmission devices (27, 47) have first electronic control means (27.3) with at least one unit (38), by means of which the coding of the measurement signal is changed after each transmission and reception cycle, in the form of an interleaved alternating code.

12. Security system according to Claim 11, **characterized in that** the unit is in the form of a clocked and programmable code manager (38).

13. Security system according to Claim 11, **characterized in that** a code (Kₙ) is provided for the respective signal to be transmitted, which code (Kₙ) comprises a part of the code (Kₙ₋₁) of the signal of the preceding transmission and reception cycle and a second element (x), which is formed by a random number generator (37).

14. Security system according to Claim 1 or 2, **characterized in that** the transmission devices (27, 47) are designed to be essentially identical.

15. Security system according to Claim 1 or 2, **characterized in that** the transmission devices (27, 47) have second electronic means, using which it is possible to adjust the clock for the operating duration and the allocation of time windows for the transmission devices.

16. Security system according to Claim 15, **characterized in that** a time period of essentially 500 µs, which is repeated cyclically, is provided for the operating duration of the transmission devices (27, 47).

17. Security system according to Claim 16, **characterized in that** a time range from 500 ms to 2 seconds is provided for the cycle time.

18. Security system according to Claim 1 or 2, **characterized in that** a number of identically designed transmission devices (47, 47', 47'', 47''') are provided, in order to enlarge the size of the movement area of the object (19) which is protected by the transmission device (27).

19. Security system according to Claim 18, **characterized in that** the transmission devices (47, 47', 47'', 47''') are located in pairs at a relative distance from one another which corresponds at most to twice the size of the reception radius of the transmission devices (27, 47).

20. Security system according to Claim 1 or 2, **characterized in that** the transmission devices (27, 47, 47', 47'', 47''') which communicate with one another are in the form of a smart card or in the form of a physically small utensil, for example a cigarette lighter.

21. Security system according to Claim 20, **characterized in that** the smart card has a multilayer structure.

22. Security system according to Claim 1 or 2, **characterized in that** an electromagnetic or acoustic coupling is provided as a wire-free connection between the transmission devices (27, 47).

23. Security system according to Claim 1 or 2, **characterized in that** the second transmission device is arranged in a stationary manner in order to monitor a large number of vehicles, and each of the individual vehicles to be monitored has a first transmission device.

24. Security system according to Claim 1 or 2, **characterized in that** the evaluation unit (38.3) is connected on the output side to a signal loudspeaker (24) or to a signal lamp, in order to produce the alarm signal.

25. Security system according to Claim 1 or 2, **characterized in that** the evaluation unit (38.3) is connected on the output side to an interface module, in order to pass the alarm signal on by means of a cable, or is connected to a transmitting unit, in order to transmit the measurement or alarm signal without the use of wires.

## Revendications

1. Système de sécurité (1) pour détecter l'éloignement d'un objet ou d'une personne d'une zone terrestre prédéfinie ainsi que pour détecter la pénétration d'un objet ou d'une personne dans la zone terrestre avec
un premier dispositif émetteur-récepteur (Ü2) pour produire et transmettre par radio un signal de contrôle à un deuxième dispositif émetteur-récepteur séparé (Ü1) ainsi que pour recevoir un signal de confirmation de réception généré par le deuxième dispositif émetteur-récepteur (Ü1) pour la réception du signal de contrôle, un des deux dispositifs émetteur-récepteur (Ü2, Ü1) étant disposé sur ou dans l'objet (2) ou la personne, ainsi qu'avec
des instruments horaires (ZM), qui sont reliés au premier dispositif émetteur-récepteur (Ü2) du côté de l'entrée pour mesurer le temps de propagation du signal entre l'émission du signal de contrôle et la réception du signal de confirmation de réception suivant immédiatement et
une unité d'évaluation (RE) reliée aux instruments horaires (ZM) du côté de l'entrée pour produire un signal de mesure (S) ou un signal d'alarme en fonction du temps de propagation du signal (Δt), **caractérisé en ce que**
au moins un des deux dispositifs émetteur-récepteur (Ü2, Ü1) présente, du côté de l'émission, une source de signal (23, 24, 25, 26) qui produit des impulsions comme signal de contrôle ou signal de confirmation de réception, qui présentent une fréquence monotone montante ou descendante pendant la durée des impulsions ou qui se composent d'une interférence jumelée semblable aux impulsions, **en ce que**
l'autre dispositif émetteur-récepteur (Ü2, Ü1) respectif présente, du côté de la réception, au moins un filtre dispersif (6, 13) avec un temps de propagation de signal prédéfini fonction de la fréquence pour compresser dans le temps les impulsions reçues, dispositif qui est adapté à la modulation d'émission, de sorte que les composantes spectrales du signal de contrôle ou de confirmation de réception apparaissent, en raison du temps de propagation du signal différent selon la fréquence, à travers le filtre dispersif (6, 13), essentiellement coïncidentes et ainsi avec de petits flous temporaires, en sortie du filtre dispersif,**en ce que**
pour produire les impulsions, qui présentent une fréquence monotone montante ou descendante pendant la durée des impulsions, la source du signal forme le signal numérique à transmettre d'abord dans une séquence de quasi-impulsions de Dirac au moyen d'un convertisseur d'impulsions (2), et **en ce que**
la séquence de quasi-impulsions de Dirac est limitée en fréquence par un filtre passe-bas (3), de sorte que la séquence de quasi-impulsions de Dirac est transformée en une séquence d'"impulsions de fente", dont la forme est décrite par la fonction sinus cardinal (sinc(x) = ^{sinx}/ₓ), laquelle est finalement modulée sur une fréquence porteuse puis amenée au filtre dispersif (6, 13).

2. Système de sécurité selon la revendication 1, **caractérisé en ce que**
le deuxième dispositif de transmission (Ü2) comprend un deuxième émetteur (S2) pour transmettre un deuxième signal de mesure envoyé dans le processus de mesure,
**en ce que** la première unité de transmission (Ü1) présente un deuxième récepteur (E2) pour recevoir le deuxième signal de mesure, récepteur qui est relié au premier émetteur (S1) du côté de la sortie pour déclencher l'émission du premier signal de mesure par la réception du deuxième signal de mesure, et
**en ce que** les instruments horaires (ZM) sont reliés du côté de l'entrée au premier récepteur (E1) et au deuxième émetteur (S2) pour mesurer le temps de propagation total entre l'émission du deuxième signal de mesure et la réception du premier signal de mesure respectivement par la deuxième unité de transmission (Ü2).

3. Système de sécurité selon la revendication 1 ou 2, **caractérisé en ce qu'**un des deux dispositifs de transmission (Ü1, Ü2) pour détecter l'éloignement d'un objet (19) d'une zone prédéfinie ou pour détecter la pénétration de l'objet (19) dans la zone est placé sur ou dans l'objet à sécuriser (19), et **en ce qu'**une unité d'évaluation (38.3) est connectée aux instruments horaires (38.2) pour produire un signal d'alarme en fonction du temps de propagation du signal mesuré.

4. Système de sécurité selon l'une quelconque des revendications précédentes, **caractérisé en ce qu'**une première unité de calcul est connectée aux instruments horaires (38.2), laquelle calcule une valeur moyenne à partir de plusieurs temps de propagation de signaux mesurés par les instruments horaires (38.2).

5. Système de sécurité selon la revendication 4, **caractérisé en ce que**
l'émetteur (S1, S2) est relié, par au moins un dispositif de transmission (Ü1, Ü2), de façon permanente au récepteur (E1, E2) de ce même dispositif de transmission (Ü1, Ü2) pour déterminer le temps de propagation interne du signal ou il peut être relié par un élément de connexion pendant un processus de calibrage,
**en ce que** les instruments horaires (38.2) sont reliés du côté de la sortie à un élément de mémoire pour mémoriser de façon intermédiaire le temps de propagation interne du signal entre l'émission, côté émetteur, du deuxième signal de mesure et la détection, côté récepteur, du premier signal de mesure,
**en ce qu'**une deuxième unité de calcul est prévue pour prendre en compte le temps de propagation interne du signal lors de la mesure de l'éloignement, unité qui est reliée, du côté de l'entrée, aux instruments horaires (38.2) pour recevoir le temps de propagation interne du signal avec l'élément de mémoire et pour recevoir le temps de propagation du signal entre l'émission du premier signal de mesure et la réception finale du deuxième signal de mesure.

6. Système de sécurité selon la revendication 1 ou 2, **caractérisé en ce qu'**au moins un dispositif de transmission présente, côté réception, un instrument de mesure de l'intensité, qui est relié, du côté de la sortie, à une unité de calcul pour calculer la proportion ou le rapport entre l'intensité du signal de confirmation de réception reçu et l'intensité du bruit, unité qui commande un régulateur du côté de la sortie, qui est relié à l'émetteur pour régler la préamplification d'entrée avec un amplificateur disposé côté récepteur ou pour régler la puissance de sortie.

7. Système de sécurité selon la revendication 1 ou 2, **caractérisé en ce que** la source du signal (16) présente, pour générer des impulsions en pointes simulant des impulsions de Dirac, un générateur d'impulsions (2), un filtre passe-bas (3), un modulateur d'amplitude (4) pour marquer les impulsions en pointe filtrées sur une onde porteuse ainsi qu'un filtre dispersif (6) avec un temps de propagation de signal fonction de la fréquence montés en série.

8. Système de sécurité selon la revendication 1 ou 2, **caractérisé en ce que** la source du signal (23, 24, 25, 26) présente un générateur d'impulsions qui produit des impulsions en dents de scie et commande un oscillateur commandé en tension pour produire les impulsions à modulation de fréquence.

9. Système de sécurité selon la revendication 1 ou 2, **caractérisé en ce que** la source du signal présente un processeur analogique numérique pour produire, côté émetteur, des impulsions à modulation de fréquence.

10. Système de sécurité selon la revendication 1 ou 2, **caractérisé en ce que** le filtre dispersif (13) prévu côté récepteur pour compresser les impulsions est un filtre à ondes acoustiques de surface.

11. Système de sécurité selon l'une quelconque des revendications précédentes, **caractérisé en ce que** les dispositifs de transmission (27, 47) présentent un premier moyen de commande électronique (27.3) avec au moins une unité modulaire (38), par laquelle a lieu une modification du codage du signal de mesure après chaque cycle d'émission et de réception sous forme de code alternatif emboîté.

12. Système de sécurité selon la revendication 11, **caractérisé en ce que** l'unité modulaire est formée comme gestionnaire de code (38) cadencé et programmable.

13. Système de sécurité selon la revendication 11, **caractérisé en ce qu'**un code (Kₙ) est prévu pour le signal respectif à envoyer, lequel code se compose d'une partie du code (Kₙ₋₁) du signal du cycle d'émission et de réception précédent et d'un deuxième élément (x) formé par un générateur de nombres aléatoires (37).

14. Système de sécurité selon la revendication 1 ou 2, **caractérisé en ce que** les dispositifs de transmission (27, 47) sont formés essentiellement de façon similaire.

15. Système de sécurité selon la revendication 1 ou 2, **caractérisé en ce que** les dispositifs de transmission (27, 47) présentent un deuxième moyen électronique, par lequel la cadence de la durée de service et l'affectation de fenêtres temporelles pour les dispositifs de transmission sont réglables.

16. Système de sécurité selon la revendication 15, **caractérisé en ce que**, pour la durée de service des dispositifs de transmission (27, 47), une période de 500 µs essentiellement est prévue, laquelle se répète de façon cyclique.

17. Système de sécurité selon la revendication 16, **caractérisé en ce que**, pour la durée du cycle, une plage de temporisation de 500 ms à 2 secondes est prévue.

18. Système de sécurité selon la revendication 1 ou 2, **caractérisé en ce que** plusieurs dispositifs de transmission (47, 47', 47", 47"') similaires sont prévus pour agrandir la taille de l'espace de mouvement de l'objet (19) sécurisé avec le dispositif de transmission (27).

19. Système de sécurité selon la revendication 18, **caractérisé en ce que** les dispositifs de transmission (47, 47', 47", 47"') sont placés par paire dans un écart relatif les uns des autres, lequel correspond au maximum à deux fois la taille du rayon de réception des dispositifs de transmission (27, 47).

20. Système de sécurité selon la revendication 1 ou 2, **caractérisé en ce que** les dispositifs de transmission (27, 47, 47', 47", 47" ') communiquant les uns avec les autres sont conçus sous forme de carte à puce ou d'un objet utilitaire de plus petite taille, par exemple, un briquet.

21. Système de sécurité selon la revendication 20, **caractérisé en ce que** la carte à puce présente une construction à plusieurs couches.

22. Système de sécurité selon la revendication 1 ou 2, **caractérisé en ce qu'**une liaison électromagnétique ou acoustique est prévue comme liaison sans fil entre les dispositifs de transmission (27, 47).

23. Système de sécurité selon la revendication 1 ou 2, **caractérisé en ce que** le deuxième dispositif de transmission est disposé de façon stationnaire pour surveiller un grand nombre de véhicules et les véhicules individuels à surveiller présentent respectivement un premier dispositif de transmission.

24. Système de sécurité selon la revendication 1 ou 2, **caractérisé en ce que** l'unité d'évaluation (38.3) est reliée à un haut-parleur de signal (24) ou à une lampe de signal pour produire le signal d'alarme du côté de la sortie.

25. Système de sécurité selon la revendication 1 ou 2, **caractérisé en ce que** l'unité d'évaluation (38.3) est reliée à une unité d'émission du côté de la sortie pour restituer par connexion le signal d'alarme avec un module d'interface ou pour une transmission sans fil du signal de mesure ou du signal d'alarme.
